# EUROPÄISCHE PATENTSCHRIFT

(11) **EP 3 452 928 B1**
(45) Veröffentlichungstag und Bekanntmachung des Hinweises auf die Patenterteilung: **31.03.2021**
(21) Anmeldenummer: 17720776.8
(22) Anmeldetag: 28.04.2017
(51) Int. Cl.: H02B 3/00, G05B 19/418

(54) **VERFAHREN UND SYSTEM ZUR KONFIGURATION EINES SCHALTSCHRANKES**
METHOD AND SYSTEM FOR CONFIGURING A SWITCHING CABINET
PROCEDE ET SYSTEME DE CONFIGURATION D'UNE ARMOIRE ELECTRIQUE

(30) Priorität: 02.05.2016 EP 16167937
(43) Veröffentlichungstag der Anmeldung: 13.03.2019
(73) Patentinhaber: Wöhner GmbH & Co. KG Elektrotechnische Systeme, 96472 Rödental (DE)
(72) Erfinder: STEINBERGER, Philipp, 96450 Coburg (DE)
(74) Vertreter: Isarpatent
(86) Internationale Anmeldenummer: PCT/EP2017/060253
(87) Internationale Veröffentlichungsnummer: WO 2017/191059

(56) Entgegenhaltungen:
- EP-A1- 2 031 626
- EP-A1- 2 928 033
- WO-A1-2015/028978
- DE-A1-102008 012 122
- NAKAGAWA T ET AL: "Plant maintenance support system by augmented reality", SYSTEMS, MAN, AND CYBERNETICS, 1999. IEEE SMC '99 CONFERENCE PROCEEDIN GS. 1999 IEEE INTERNATIONAL CONFERENCE ON TOKYO, JAPAN 12-15 OCT. 1999, PISCATAWAY, NJ, USA,IEEE, US, Bd. 1, 12. Oktober 1999 (1999-10-12), Seiten 768-773, XP010363359, DOI: 10.1109/ICSMC.1999.814188 ISBN: 978-0-7803-5731-0

## Beschreibung

Ein Schaltschrank kann verschiedene Funktionseinheiten einer elektrischen Schaltung beinhalten. Der Schaltschrank beherbergt elektrische und/oder elektronische Funktionseinheiten der elektrischen Schaltung. Die elektrische Schaltung kann dabei Teil einer verfahrenstechnischen Anlage oder einer Fertigungseinrichtung bilden.

Schaltschränke weisen je nach Anwendung ein Gehäuse zur Aufnahme der Funktionseinheiten auf, das aus Kunststoff oder Blech bestehen kann. Die innerhalb des Schaltschrankes befindlichen verschiedenen Fertigungseinheiten bzw. Komponenten sind miteinander verschaltet, beispielsweise mittels Klemmen oder Klemmleisten. Schaltschränke, die in ihrem Inneren Funktionseinheiten aufweisen, welche relativ hohe Spannungen führen, verfügen zudem über eine verschließbare Schaltschranktür. Die Baugröße und Bauform von Schaltschränken kann je nach Anwender und Hersteller stark variieren. Je nach Anwendung variieren zudem die in dem Schaltschrank montierten Funktionseinheiten der implementierten elektrischen Schaltung. Diese Funktionseinheiten können von verschiedenen Herstellern stammen, sodass eine hohe Anzahl unterschiedlicher Funktionseinheiten innerhalb des Schaltschrankes bei einer komplexen elektrischen Schaltung miteinander verschaltet sein können. Bei herkömmlichen Schaltschränken besteht die Notwendigkeit, die darin implementierte elektrische Schaltung um weitere Funktionen zu erweitern oder Funktionseinheiten, die in dem Schaltschrank montiert sind, zu ersetzen. Der Ersatz einer Funktionseinheit erfolgt beispielsweise, falls die bisherige Funktionseinheit bestimmte Funktionen nicht bereitstellen kann oder die betreffende Funktionseinheit defekt ist. In vielen Anwendungsfällen ist es notwendig, einen bestehenden Schaltschrank neu zu konfigurieren bzw. umzukonfigurieren, um bestimmten Anforderungen, beispielsweise Leistungsanforderungen oder Sicherheitsanforderungen, gerecht zu werden.

Bei herkömmlichen Schaltschränken kann eine Konfiguration des Schaltschrankes nur mit erheblichem Aufwand durchgeführt werden. Üblicherweise wird der bestehende Schaltschrank durch einen Techniker in Augenschein genommen, um die darin montierten Funktionseinheiten zu erkennen und anhand eines ggf. vorhandenen Schaltplanes die Verschaltung der Funktionseinheiten untereinander zu ermitteln. Sobald die in dem elektrischen Schaltschrank implementierte Schaltung ermittelt worden ist, wird durch einen Techniker manuell zumindest ein Teil der vorhandenen Funktionseinheiten durch geeignetere Ersatzfunktionseinheiten ersetzt und ein entsprechender Schalt- und Montageplan für den umkonfigurierten neuen Schaltschrank erstellt. Dieser Vorgang ist äußerst zeitaufwendig und fehleranfällig. Zudem kann die Umkonfiguration nur durch einen Mitarbeiter erfolgen, der in der Lage ist, elektrische Schaltpläne zu lesen und anhand technischer Daten für defekte oder veraltete Funktionseinheiten entsprechende geeignete Ersatzfunktionseinheiten zu ermitteln, die zudem geeignet bzw. kompatibel mit anderen bestehenden Funktionseinheiten des Schaltschrankes sind

Aus den Dokumenten EP2928033A1 und WO2015/028978A1 sind Konfigurationssysteme bekannt, welche es ermöglichen, den Schaltplan eines existierenden Schaltschranks zu bestimmen.

Es ist daher die Aufgabe der vorliegenden Erfindung, ein Verfahren und ein System zur Konfiguration eines Schaltschrankes zu schaffen, welche die Konfiguration des Schaltschrankes erleichtert und Fehler bei der Konfigurierung des Schaltschrankes vermeidet bzw. reduziert.

Diese Aufgabe wird erfindungsgemäß durch ein Konfigurationssystem mit den in Patentanspruch 1 angegebenen Merkmalen gelöst.

Die Erfindung schafft demnach ein Konfigurationssystem zur Konfiguration eines Schaltschrankes mit:
einer Erkennungseinheit zur Erkennung von innerhalb eines Schaltschrankes montierten Funktionseinheiten einer elektrischen Schaltung,
einer Konfigurationseinheit, die auf Basis der erkannten Funktionseinheiten der elektrischen Schaltung einen elektrischen Schaltplan der elektrischen Schaltung berechnet und die erkannten Funktionseinheiten des berechneten Schaltplanes zumindest teilweise automatisch durch Ersatzfunktionseinheiten ersetzt, und
einer Ausgabeeinheit zur Ausgabe der ermittelten Ersatzfunktionseinheiten.

Bei einer möglichen Ausführungsform des erfindungsgemäßen Konfigurationssystems hat die Konfigurationseinheit über eine erste Schnittstelle Zugriff auf die Datenbank, die Funktionseinheiten und zugehörige Ersatzfunktionseinheiten sowie verschiedene Schaltschranktypen von Schaltschränken speichert.

Beim erfindungsgemäßen Konfigurationssystem erkennt die Erkennungseinheit des Konfigurationssystems eine innerhalb des Schaltschrankes montierte Funktionseinheit anhand mindestens eines charakteristischen Merkmales der Funktionseinheit. Dabei erkennt die Erkennungseinheit des Konfigurationssystems als charakteristisches Merkmal der Funktionseinheit ein eindeutiges aus der Funktionseinheit ausgelesenes Identifizierungsmerkmal der Funktionseinheit.

Bei einer weiteren möglichen Ausführungsform des erfindungsgemäßen Konfigurationssystems erkennt die Erkennungseinheit des Konfigurationssystems als charakteristisches Merkmal der Funktionseinheit ein äußeres Gestaltungsmerkmal der Funktionseinheit.

Bei einer weiteren möglichen Ausführungsform des erfindungsgemäßen Konfigurationssystems erkennt die Erkennungseinheit des Konfigurationssystems anhand mindestens eines charakteristischen Merkmales des Schaltschrankes automatisch einen Typ des Schaltschrankes.

Beim erfindungsgemäßen Konfigurationssystem werden durch die Konfigurationseinheit des Konfigurationssystems Funktionseinheiten des berechneten Schaltplanes der elektrischen Schaltung durch zugehörige in einer Datenbank gespeicherte Ersatzfunktionseinheiten zur Fehlerbeseitigung und/oder Optimierung des Schaltschrankes im Hinblick auf mindestens ein Optimierungskriterium automatisch ersetzt. Dabei weist das bei der automatischen Optimierung verwendete Optimierungskriterium auf:
einen benötigten Bauraum der Ersatzfunktionseinheiten innerhalb des Schaltschrankes,
eine Wärmeentwicklung durch die Ersatzfunktionseinheiten innerhalb des Schaltschrankes,
eine Wärmeabfuhr durch die Ersatzfunktionseinheiten und eine Erfüllung einer vorgegebenen Zertifizierungsanforderung durch die Ersatzfunktionseinheiten und/oder
eine Erfüllung einer vorgegebenen Leistungsanforderung durch die Ersatzfunktionseinheiten.

Bei einer weiteren möglichen Ausführungsform des erfindungsgemäßen Konfigurationssystems hat die Konfigurationseinheit des Konfigurationssystems über eine Schnittstelle Zugriff auf Datenspeicher der in dem Schaltschrank montierten Funktionseinheiten und/oder auf einen Datenspeicher des Schaltschrankes.
Bei einer möglichen Ausführungsform des erfindungsgemäßen Konfigurationssystems weist der Datenspeicher einer Funktionseinheit Identifizierungsdaten zur Identifizierung der jeweiligen Funktionseinheit und/oder technische Daten zur Beschreibung technischer Eigenschaften der jeweiligen Funktionseinheit und/oder Zustandsdaten zur Beschreibung eines momentanen Zustandes der jeweiligen Funktionseinheit und/oder von der jeweiligen Funktionseinheit erzeugte Messdaten auf.

Bei einer weiteren möglichen Ausführungsform des erfindungsgemäßen Konfigurationssystems weist der Datenspeicher des Schaltschrankes Identifizierungsdaten zur Identifizierung des Schaltschrankes und/oder technische Daten zur Beschreibung technischer Eigenschaften des Schaltschrankes und/oder Zustandsdaten zur Beschreibung eines momentanen Zustandes des jeweiligen Schaltschrankes und/oder von einer Funktionseinheit des Schaltschrankes erzeugte Messdaten auf.

Bei einer weiteren möglichen Ausführungsform des erfindungsgemäßen Konfigurationssystems sind die Erkennungseinheit, die Konfigurationseinheit und/oder die Ausgabeeinheit in einem tragbaren Nutzergerät integriert.

Bei einer weiteren möglichen Ausführungsform des erfindungsgemäßen Konfigurationssystems weist das tragbare Nutzergerät eine drahtlose Schnittstelle zum Auslesen von Daten aus Datenspeichern der in dem Schaltschrank montierten Funktionseinheiten und/oder aus einem Datenspeicher des Schaltschrankes auf.

Bei einer weiteren möglichen Ausführungsform des erfindungsgemäßen Konfigurationssystems weist die Erkennungseinheit des Konfigurationssystems mindestens einen Sensor zur optischen Erfassung der innerhalb des Schaltschrankes montierten Funktionseinheiten auf.

Bei einer weiteren möglichen Ausführungsform des erfindungsgemäßen Konfigurationssystems liefert der optische Sensor Bilder der in dem Schaltschrank montierten Funktionseinheiten an die Konfigurationseinheit des Konfigurationssystems.

Bei einer weiteren möglichen Ausführungsform des erfindungsgemäßen Konfigurationssystems weist die Konfigurationseinheit des Konfigurationssystems eine Berechnungseinheit, insbesondere einen Prozessor, auf, der geometrische Abmessungen und/oder Abstände der innerhalb des Schaltschrankes montierten Funktionseinheiten auf Grundlage der von der Erkennungseinheit erhaltenen Bilder der innerhalb des Schaltschrankes montierten Funktionseinheiten automatisch berechnet.
Bei einer weiteren möglichen Ausführungsform des erfindungsgemäßen Konfigurationssystems weist die Ausgabeeinheit des Konfigurationssystems ein Display auf, das die ermittelten Ersatzfunktionseinheiten zusammen mit den nicht ersetzten bisherigen Funktionseinheiten in einem virtuell montierten Zustand in dem Schaltschrank projiziert anzeigt.
Bei einer weiteren möglichen Ausführungsform des erfindungsgemäßen Konfigurationssystems weist das tragbare Nutzergerät als Ausgabeeinheit eine dreidimensionale Brille mit Display auf.

Die Erfindung schafft ferner gemäß einem weiteren Aspekt ein Verfahren zur Konfiguration eines Schaltschrankes mit den Merkmalen des Patentanspruchs 10.

Die Erfindung schafft demnach ein Verfahren zur Konfiguration eines Schaltschrankes mit den Schritten:
Erkennen von innerhalb eines Schaltschrankes montierten Funktionseinheiten einer elektrischen Schaltung,
Berechnen eines elektrischen Schaltplanes der elektrischen Schaltung auf Basis der erkannten Funktionseinheiten der elektrischen Schaltung,
Ersetzen der erkannten Funktionseinheiten des berechneten Schaltplanes durch Ersatzfunktionseinheiten, und Ausgeben der ermittelten Ersatzfunktionseinheiten.

Im Weiteren werden mögliche Ausführungsformen des erfindungsgemäßen Konfigurationssystems und des erfindungsgemäßen Verfahrens zur Konfiguration eines Schaltschrankes unter Bezugnahme auf die beigefügten Figuren detailliert beschrieben.

Es zeigen:
- Fig. 1: ein Blockschaltbild zur Darstellung einer exemplarischen Ausführungsform eines erfindungsgemäßen Konfigurationssystems;
- Fig. 2: ein weiteres Blockschaltbild zur Darstellung einer weiteren exemplarischen Ausführungsform eines erfindungsgemäßen Konfigurationssystems;
- Fig. 3: ein Blockschaltbild einer weiteren beispielhaften Ausführungsform eines erfindungsgemäßen Konfigurationssystems;
- Fig. 4: eine schematische Darstellung einer weiteren beispielhaften Ausführungsform des erfindungsgemäßen Konfigurationssystems;
- Figuren 5A, 5B: ein Beispiel eines umkonfigurierten elektrischen Schaltschrankes zur Erläuterung der Funktionsweise des erfindungsgemäßen Verfahrens und Systems zur Konfiguration eines Schaltschrankes;
- Figuren 6A, 6B: ein exemplarisches Beispiel zur Umkonfiguration eines Schaltschrankes mithilfe eines erfindungsgemäßen Konfigurationssystems;
- Figuren 7A, 7B: ein konkretes Beispiel zur Erläuterung der durch das erfindungsgemäße Konfigurationssystem vorgenommenen Umkonfiguration einer elektrischen Schaltung;
- Fig. 8: ein Ablaufdiagramm zur Darstellung eines Ausführungsbeispiels des erfindungsgemäßen Verfahrens zur Konfiguration eines Schaltschrankes.

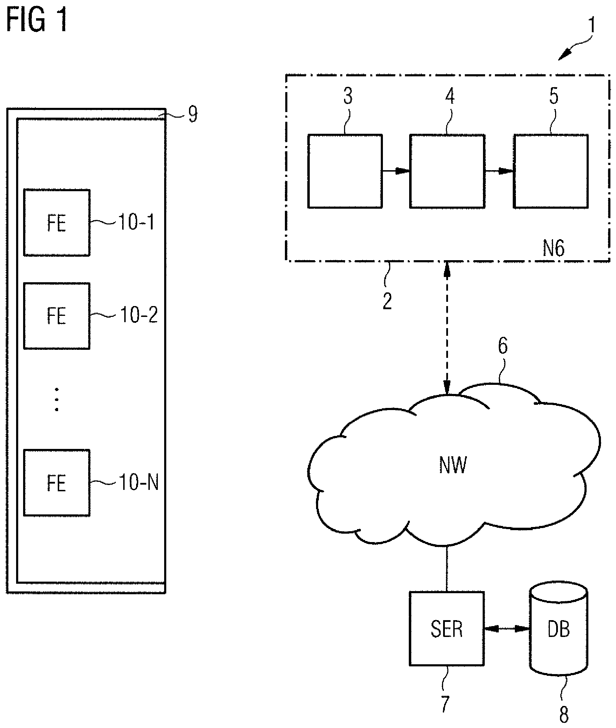

Wie man aus Fig. 1 erkennen kann, weist ein erfindungsgemäßes Konfigurationssystem 1 bei der in Fig. 1 dargestellten Ausführungsform ein Nutzergerät 2 auf, bei dem es sich vorzugsweise um ein tragbares bzw. portables Nutzergerät handelt. Das Konfigurationssystem 1 enthält bei der in Fig. 1 dargestellten Ausführungsform eine Erkennungseinheit 3, eine Konfigurationseinheit 4 und eine Ausgabeeinheit 5. Bei der in Fig. 1 dargestellten Ausführungsform ist die Erkennungseinheit 3, die Konfigurationseinheit 4 sowie die Ausgabeeinheit 5 in dem tragbaren Nutzergerät 2 integriert. Bei weiteren Ausführungsformen können die Konfigurationseinheit 4 und die Ausgabeeinheit 5 in einem separaten Computer oder Rechner implementiert sein. Bei der in Fig. 1 dargestellten Ausführungsform besitzt das Nutzergerät 2 mindestens eine Schnittstelle zu einem Netzwerk 6. Ein Server 7 ist mit dem Netzwerk 6 verbunden und hat Zugriff auf eine Datenbank 8.

Ein Nutzer, der das Nutzergerät 2 mit sich führt, kann die Erkennungseinheit 3 vor einen Schaltschrank 9 halten, in dem verschiedene Funktionseinheiten 10-1, 10-2, 10-n montiert sind. Die Funktionseinheiten 10-i können verschiedenste Arten von Funktionseinheiten umfassen, insbesondere Funktionseinheiten zur Energieversorgung anderer Funktionseinheiten innerhalb des Schaltschrankes oder von Geräten, beispielsweise Motoren, die mit den Funktionseinheiten 10-i des Schaltschrankes 9 verbunden sind. Weiterhin können die Funktionseinheiten 10-i zur Belüftung oder Kühlung weiterer Funktionseinheiten innerhalb des Schaltschrankes 9 dienen. Andere Funktionseinheiten 10-i innerhalb des Schaltschrankes 9 dienen zur Energieverteilung bzw. Energieverzweigung innerhalb des Schaltschrankes oder zur Energieverteilung an Geräte, die mit dem Schaltschrank 9 verbunden sind. Andere Funktionseinheiten können beispielsweise der elektrischen Sicherung von Funktionseinheiten oder von angeschlossenen Geräten dienen. Darüber hinaus kann der Schaltschrank 9 Funktionseinheiten 10-i aufweisen, die Messdaten erzeugen. Darüber hinaus kann der Schaltschrank 9 Funktionseinheiten 10-i zur Überwachung anderer Funktionseinheiten oder zur Überwachung von Geräten aufweisen. Ein weiterer Typ von Funktionseinheiten 10-i dient zur Steuerung und/oder Regelung von anderen Funktionseinheiten bzw. Geräten. Weitere Beispiele für Funktionseinheiten 10-i sind Funktionseinheiten zum Schutz vor Feuer oder Explosionen oder Funktionseinheiten, die zur Frequenzumrichtung vorgesehen sind.

Die verschiedenartigen Funktionseinheiten 10-i können an Stromschienen, insbesondere Stromsammelschienen, und/oder an Trägerschienen des Schaltschrankes montiert sein. Die verschiedenartigen Funktionseinheiten sind miteinander zur Realisierung einer elektrischen Schaltung verschaltet. Die Konfigurationseinheit 4 hat über die Schnittstelle des Nutzergerätes 2 über das Netzwerk 6 sowie den Server 7 Zugriff auf die Datenbank 8.

Die Erkennungseinheit 3 dient zur Erkennung von innerhalb des Schaltschrankes 9 montierten Funktionseinheiten 10-i und der durch die Funktionseinheiten implementierten elektrischen Schaltung. Die Erkennungseinheit 3 erkennt bei einer möglichen Ausführungsform eine innerhalb des Schaltschrankes 9 montierte Funktionseinheit 10 der implementierten elektrischen Schaltung anhand mindestens eines charakteristischen Merkmales der Funktionseinheit 10.

Das charakteristische Merkmal der Funktionseinheit 10 ist bei einer möglichen Ausführungsform ein eindeutiges Identifizierungsmerkmal, das auf einem Speicher der Funktionseinheit 10 auslesbar ist oder an dem Gehäuse der Funktionseinheit 10 angebracht ist. Bei einer möglichen Ausführungsform handelt es sich bei dem charakteristischen Merkmal um eine aus einem lokalen Datenspeicher der Funktionseinheit 10 auslesbare Seriennummer, Produktnummer oder Artikelnummer eines Herstellers. Das Identifizierungsmerkmal der Funktionseinheit 10 kann bei einer möglichen Ausführungsform drahtlos aus einem Speicher über eine drahtlose Schnittstelle ausgelesen werden, beispielsweise über eine NFC- oder Bluetooth-Schnittstelle. Alternativ kann das Identifizierungsmerkmal auch mittels RFID-Technik ausgelesen werden. Bei einer weiteren möglichen Ausführungsform ist an dem Gehäuse der Funktionseinheit 10 ein eindimensionaler oder zweidimensionaler Barcode zur Identifizierung der Funktionseinheit 10 angebracht. Beispielsweise verfügt mindestens ein Teil der Funktionseinheiten 10 über einen an dem jeweiligen Gehäuse der Funktionseinheit 10 angebrachten QRC-Code. Bei einer möglichen Implementierung ist die Erkennungseinheit 3 des Nutzergerätes 2 ein optischer Sensor zur Erkennung des an dem Gehäuse der Funktionseinheiten 10-i jeweils angebrachten optischen Codes.

Bei einer weiteren möglichen Ausführungsform handelt es sich bei dem mindestens einen charakteristischen Merkmal der Funktionseinheit 10 um ein äußeres Gestaltungsmerkmal der Funktionseinheit 10, beispielsweise eine Gehäuseform oder Gehäusefarbe eines Gehäuses der Funktionseinheit 10.

Bei einer möglichen Ausführungsform werden verschiedene charakteristische Merkmale der Funktionseinheit 10, d.h. sowohl Identifizierungsmerkmale als auch Gestaltungsmerkmale, in Kombination herangezogen, um die betreffende Funktionseinheit 10 eindeutig zu erkennen bzw. zu identifizieren.

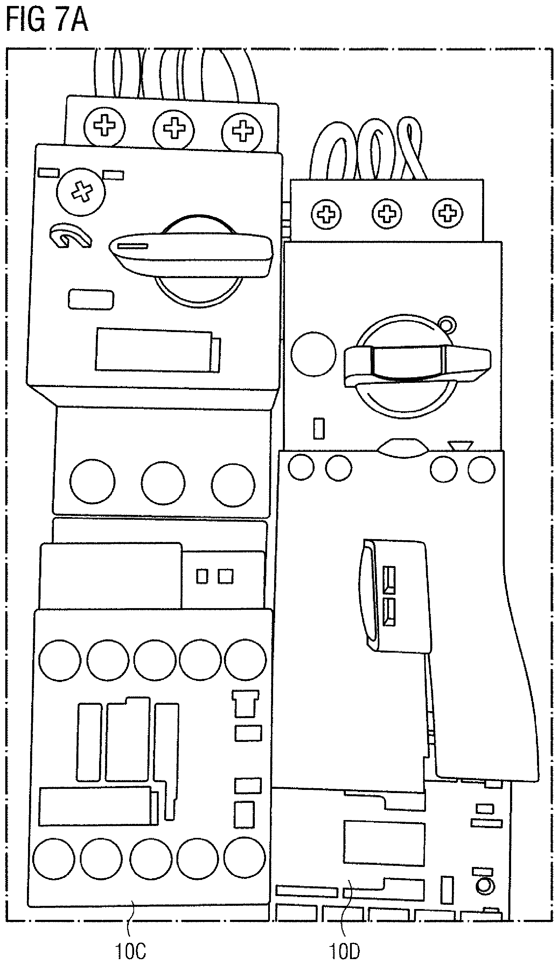

Beispielsweise sind in Fig. 7A als Funktionseinheiten 10 Motorstarter verschiedenen Typs dargestellt, die anhand äußerer Gestaltungsmerkmale bereits eindeutig unterscheidbar sind. Die Form, Farbe und ggf. auf dem Gehäuse der Funktionseinheit 10 angebrachte Produktbezeichnungen erlauben es, die jeweilige Funktionseinheit 10 bzw. den Motorstarter eindeutig zu identifizieren. Weiterhin können die Funktionseinheiten 10-i auch auslesbare Identifizierungsmerkmale aufweisen, beispielsweise abgespeicherte Produktnummern, Seriennummern oder Artikelnummern. Auch optische Kennzeichen, beispielsweise Warenzeichen bzw. Marken oder Logos können zur eindeutigen Identifizierung einer Funktionseinheit 10 innerhalb des Schaltschrankes 9 durch die Erkennungseinheit 3 herangezogen werden. Die Erkennungseinheit 3 ist mit der Konfigurationseinheit 4 verbunden. Die Konfigurationseinheit 4 hat über die Schnittstelle Zugriff auf die Datenbank 8. In der Datenbank 8 sind für verschiedene Funktionseinheiten 10-i zugehörige Ersatzfunktionseinheiten 11-i gespeichert. Dabei können sowohl die Funktionseinheiten 10-i als auch zugehörige Ersatzfunktionseinheiten 11-i von verschiedenen Herstellern in der Datenbank 8 abgelegt sein. Bei einer möglichen Ausführungsform sind in der Datenbank 8 ferner verschiedene Schaltschranktypen mit zugehörigen technischen Daten gespeichert.

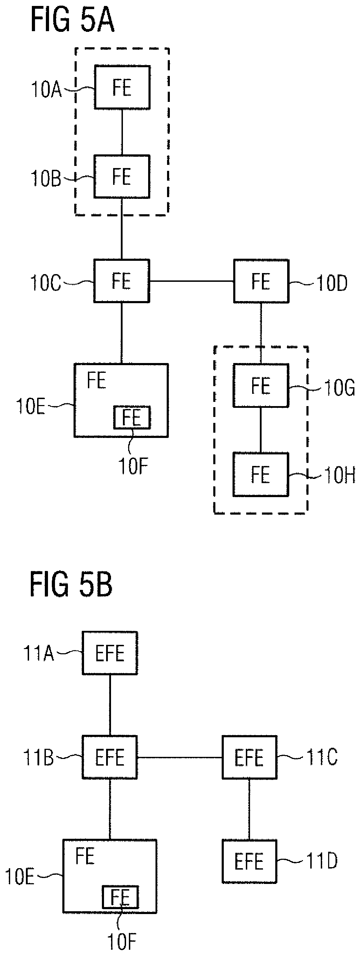

Die Konfigurationseinheit 4 enthält vorzugsweise eine Berechnungseinheit bzw. einen Prozessor, der auf Basis der anhand der charakteristischen Merkmale erkannten Funktionseinheiten 10 der in dem Schaltschrank 9 implementierten elektrischen Schaltung automatisch einen elektrischen Schaltplan der elektrischen Schaltung berechnet, wie es in Fig. 5A schematisch dargestellt ist. Wie man in Fig. 5A erkennen kann, sind verschiedene Funktionseinheiten 10 in einem berechneten Schaltplan miteinander verbunden. Die Berechnungseinheit der Konfigurationseinheit 4 ersetzt nach Erhalt eines entsprechenden Befehls die erkannten bisherigen Funktionseinheiten 10 des berechneten Schaltplanes zumindest teilweise automatisch durch Ersatzfunktionseinheiten 11. Fig. 5B zeigt schematisch den elektrischen Schaltplan nach Ersetzung verschiedener Funktionseinheiten 10. Bei dem in den Figuren 5A, 5B dargestellten Beispiel werden die beiden Funktionseinheiten 10A, 10B durch die Ersatzfunktionseinheit 11A ersetzt. Weiterhin werden die Funktionseinheiten 10C, 10D durch die Ersatzfunktionseinheiten 11B, 11C ersetzt. Darüber hinaus werden die beiden Funktionseinheiten 10G, 10H durch die Ersatzfunktionseinheit 11D ersetzt. Bei dem in den Figuren 5A, 5B dargestellten Beispiel wird die ursprünglichen Funktionseinheit 10E durch die Konfigurationseinheit 4 nicht ersetzt. Die in dem ursprünglichen Schaltschrank 9 implementierte elektrische Schaltung, wie sie im Schaltplan gemäß Fig. 5A beschrieben ist, wird entsprechend Fig. 5B umkonfiguriert. Bei einer möglichen Ausführungsvariante werden alle bisherigen Funktionseinheiten 10 durch entsprechende Ersatzfunktionseinheiten 11 ersetzt. Bei einer alternativen Ausführungsform wird nur ein Teil der bisherigen Funktionseinheiten 10 durch Ersatzfunktionseinheiten 11 ersetzt, beispielsweise wenn für bestimmte Funktionseinheiten keine geeigneten Ersatzfunktionseinheiten innerhalb der Datenbank 8 gespeichert sind. Bei einer möglichen Ausführungsvariante sind die Ersatzfunktionseinheiten 11 von einem bestimmten Hersteller hergestellt, welcher das Konfigurationssystem 1 betreibt.

Bei einer bevorzugten Ausführungsvariante werden durch die Konfigurationseinheit 4 die Funktionseinheiten 10 des berechneten Schaltplanes zumindest teilweise durch zugehörige in der Datenbank 8 gespeicherte Ersatzfunktionseinheiten 11 zur Optimierung der in dem Schaltschrank 9 implementierten Schaltung im Hinblick auf mindestens ein Optimierungskriterium automatisch ersetzt. Bei dem vorgegebenen Optimierungskriterium, welches zur automatischen Optimierung der implementierten Schaltung dient, kann es sich beispielsweise um den notwendigen Bauraum innerhalb des Schaltschrankes 9 handeln. Bei einer möglichen Ausführungsvariante kann ein Nutzer mindestens ein Optimierungskriterium über eine Nutzerschnittstelle in die Konfigurationseinheit 4 eingeben. Ein weiteres Beispiel für ein verwendbares Optimierungskriterium ist die innerhalb des Schaltschrankes 9 erzeugte Wärme. Dabei besteht das Optimierungskriterium darin, die Wärmeentwicklung durch die Funktionseinheiten 10 sowie Ersatzfunktionseinheiten 11 innerhalb des Schaltschrankes 9 zu minimieren. Ein weiteres Beispiel für ein verwendbares Optimierungskriterium besteht in der Wärmeabfuhr der erzeugten Wärme heraus aus dem Schaltschrank 9. Dabei besteht die Optimierung darin, möglichst viel Wärme durch die Funktionseinheiten 10 bzw. Ersatzfunktionseinheiten 11 aus dem Schaltschrank 9 herauszuführen. Ein weiteres Beispiel für ein verwendetes Optimierungskriterium ist die Erfüllung von vorgegebenen Zertifizierungsanforderungen. Dabei werden Ersatzfunktionseinheiten 11 zur Ersetzung von Funktionseinheiten 10 herangezogen, die eine vorgegebene Zertifizierungsanforderung erfüllen. Bei einer weiteren möglichen Ausführungsform besteht ein Optimierungskriterium darin, dass die Ersatzfunktionseinheiten 11 vorgegebene Leistungsanforderungen und Standortanforderungen, beispielsweise Netzfrequenzparameter, erfüllen. Weiterhin müssen die vorgeschlagenen Ersatzfunktionseinheiten 11 untereinander und mit den bisherigen nicht ersetzten Funktionseinheiten 10 an ihren Schnittstellen zu den bisherigen Funktionseinheiten 10 kompatibel sein. Die Berechnungseinheit der Konfigurationseinheit 4 führt daher vorzugsweise bei der Berechnung des elektrischen Schaltplanes, wie er in den Figuren 5A, 5B dargestellt ist, anhand von in Datenspeichern 12 gespeicherten technischen Daten einen Kompatibilitätscheck zwischen den verschiedenen Funktionseinheiten 10 bzw. Ersatzfunktionseinheiten 11 durch. Nur miteinander kompatible Funktionseinheiten 10 und Ersatzfunktionseinheiten 11 bilden Teil des in Fig. 5B dargestellten umkonfigurierten elektrischen Schaltplanes.

Bei einer möglichen Implementierung wird für jede Funktionseinheit 10 und zugehöriger Ersatzfunktionseinheiten 11 ein Datenmodell in der Datenbank 8 abgelegt, insbesondere ein objektorientiertes Datenmodell mit entsprechenden konfigurierbaren Ports, die mit Ports anderer Funktionseinheiten 10 oder Ersatzfunktionseinheiten 11 automatisch verbindbar sind. Bei einer möglichen Ausführungsform kann sich ein Nutzer die in der Datenbank 8 abgelegten Datenmodelle über eine Schnittstelle ausgeben bzw. anzeigen lassen. Die Datenmodelle der Funktionseinheiten 10 und/oder Ersatzfunktionseinheiten 11 können bei einer möglichen Ausführungsform von Servern der verschiedenen Hersteller der Funktionseinheiten 10 und/oder Ersatzfunktionseinheiten 11 runtergeladen werden und in einer zentralen Datenbank 8 hinterlegt werden. Bei einer möglichen Ausführungsform hat der Nutzer die Möglichkeit, mithilfe eines Editors für eine bestimmte Funktionseinheit 10 ein zugehöriges Datenmodell bzw. Datenobjekt zu erstellen bzw. anzupassen und diesen Datenobjekte von geeigneten Ersatzfunktionseinheiten 11 zuzuweisen bzw. zuzuordnen.

Die durch die Konfigurationseinheit 4 ermittelten Ersatzfunktionseinheiten 11 werden bei einer möglichen Ausführungsform durch die Ausgabeeinheit 5 des Nutzergerätes 2 an einen Nutzer ausgegeben. Darüber hinaus können die ermittelten Ersatzfunktionseinheiten 11 auch über eine an einem PC oder Computer vorhandene Ausgabeeinheit an anderer Stelle ausgegeben werden, beispielsweise an einer Produktionsstelle für Funktionseinheiten.

Die Erkennungseinheit 3 weist bei einer möglichen Ausführungsform einen Sensor zur optischen Erfassung der innerhalb des Schaltschrankes 9 montierten verschiedenen Funktionseinheiten 10 auf, wobei die Erkennungseinheit 3 Bilder, insbesondere Kamerabilder, der in dem Schaltschrank 9 montierten Funktionseinheiten 10 an die Konfigurationseinheit 4 liefert bzw. überträgt.

Bei einer möglichen Ausführungsform verfügt die Konfigurationseinheit 4 über eine Berechnungseinheit, welche automatisch die geometrischen Abmessungen und/oder Abstände der innerhalb des Schaltschrankes 9 montierten verschalteten Funktionseinheiten 10 auf Grundlage der von der Erkennungseinheit 3 erhaltenen Bilder der innerhalb des Schaltschrankes 9 montierten Funktionseinheiten 10 automatisch berechnet. Dabei wird beispielsweise automatisch der Abstand zwischen dem Nutzergerät 2 und dem Schaltschrank 9 gemessen und der gemessene Abstand für die Berechnung der geometrischen Abmessungen und/oder Abstände der innerhalb des Schaltschrankes 9 montierten Funktionseinheiten 10 mitberücksichtigt. Die auf diese Weise ermittelten Abstände und geometrischen Abmessungen werden bei einer möglichen Ausführungsform bei der Optimierung der innerhalb des Schaltschrankes 9 montierten Schaltung im Hinblick auf das Optimierungskriterium Bauraum ausgewertet.

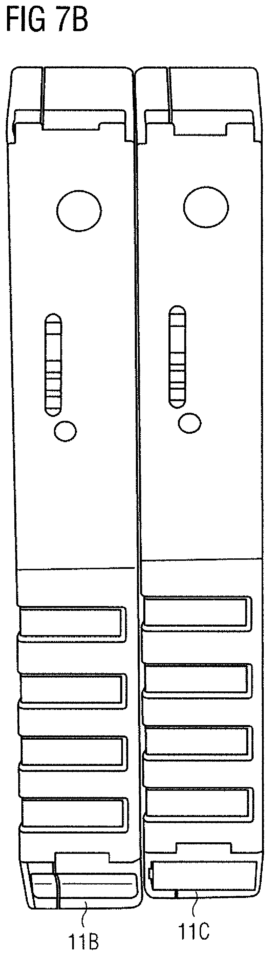

Bei einer weiteren möglichen Ausführungsform des erfindungsgemäßen Konfigurationssystems 1 verfügt die Ausgabeeinheit 5 über eine Anzeige bzw. ein Display. Bei einer möglichen Ausführungsform werden die ermittelten Ersatzfunktionseinheiten 11 zusammen mit den bisherigen, nicht ersetzten Funktionseinheiten 10 des Schaltschrankes 9 in einem virtuell montierten Zustand auf einer Abbildung des Schaltschrankes 9 projiziert angezeigt, sodass sich ein Nutzer eine unmittelbare Vorstellung von dem Verschaltungszustand des Schaltschrankes 9 nach erfolgter Umkonfigurierung machen kann. Beispielsweise zeigen die Figuren 7A, 7B die Verschaltung von Motorstartern als Funktionseinheiten 10 innerhalb eines Schaltschrankes 9. Fig. 7A zeigt die Verschaltung mit ursprünglichen Funktionseinheiten 10C, 10D, welche durch Ersatzfunktionseinheiten 11B, 11C ersetzt werden. Dabei werden die Ersatzfunktionseinheiten 11B, 11C bei einer möglichen Ausführungsform direkt bei einer Projektion des Schaltschrankes 9 für den Nutzer ausgegeben. Bei einer möglichen Ausführungsvariante ist das Display der Ausgabeeinheit 5 in einer 3D-Brille integriert, welche von einem Nutzer vor Ort getragen wird. Bei einer alternativen Ausführungsform ist das in Fig. 1 dargestellte Nutzergerät 2 ein Handy oder ein Tablet mit einem Display zur Anzeige eines Schaltplanes mit den ermittelten Ersatzfunktionseinheiten 11.

Bei einer möglichen Ausführungsvariante des erfindungsgemäßen Konfigurationssystems 1 erfolgt die Ersetzung von Funktionseinheiten 10 des berechneten elektrischen Schaltplanes der in dem Schaltschrank 9 implementierten elektrischen Schaltung schrittweise. Dabei wird zunächst ein elektrischer Schaltplan der elektrischen Schaltung durch die Berechnungseinheit der Konfigurationseinheit 4 berechnet und über ein Display der Ausgabeeinheit 5 dem Techniker angezeigt. Der Techniker hat dann die Möglichkeit, über eine Nutzerschnittstelle, beispielsweise eine grafische Nutzerschnittstelle GUI, eine oder mehrere Funktionseinheiten 10 des Schaltplanes auszuwählen bzw. zu selektieren, deren Ersetzung er wünscht bzw. für notwendig erachtet. Beispielsweise kann bei dem in Fig. 5A dargestellten Beispiel eines Schaltplanes der Nutzer die beiden Funktionseinheiten 10A, 10B auswählen und die Konfigurationseinheit 4 anweisen, die Funktionseinheiten 10A, 10B durch eine oder mehrere geeignete Ersatzfunktionseinheiten 11 zu ersetzen. Dabei hat der Nutzer bei einer möglichen Ausführungsvariante die Möglichkeit, zusätzlich hierfür weitere Vorgaben zu machen, beispielsweise dass die Ersatzfunktionseinheiten 11 eine bestimmte Zertifizierungsanforderung für einen bestimmten technischen Standard erfüllen müssen. Weiterhin hat der Nutzer beispielsweise die Möglichkeit, einen von ihm bevorzugten Hersteller der Ersatzfunktionseinheit auszuwählen.

Weiterhin besteht eine Möglichkeit für den Nutzer bei einer möglichen Ausführungsvariante darin, bestimmte elektrische Parameter der gewünschten Ersatzfunktionseinheit vorzugeben, beispielsweise eine notwendige Amperage bzw. Stromstärke oder dergleichen. Mithilfe dieser Zusatzangaben sucht die Konfigurationseinheit 4 anschließend innerhalb der Datenbank 8 nach geeigneten Ersatzfunktionseinheiten 11, welche geeignet sind, die ausgewählten Funktionseinheiten 10A, 10B zu ersetzen und die weiteren angegebenen Anforderungen bzw. Optimierungskriterien zu erfüllen. Bei dem in den Figuren 5A, 5B dargestellten Beispiel wird in der Datenbank 8 als geeignete Ersatzfunktionseinheit die Ersatzfunktionseinheit 11A ermittelt. Die bisherigen Funktionseinheiten 10A, 10B werden daraufhin automatisch durch die ermittelte errechnete Ersatzfunktionseinheit 11A ersetzt.

Bei einer weiteren speziellen Ausführungsform besteht für den Nutzer bzw. Techniker die Möglichkeit, den Ersetzungsvorgang iterativ fortzusetzen, indem er beispielsweise versucht, eine oder mehrere Ersatzfunktionseinheiten 11 ihrerseits durch geeignete Ersatzfunktionseinheiten zu ersetzen, um eine weitere Optimierung der Schaltung, insbesondere zur Einsparung von Platz innerhalb des Schaltschrankes 9, zu erreichen.

Bei einer weiteren möglichen Ausführungsform macht die Konfigurationseinheit 4 bei der Durchsuchung der Datenbank 8 dem Nutzer verschiedene Vorschläge zur Ersetzung der von ihm selektierten Funktionseinheiten, beispielsweise der Funktionseinheiten 10A, 10B. Beispielsweise kann die Konfigurationseinheit 4 dem Nutzer über die Ausgabeeinheit 5 verschiedene geeignete Ersatzfunktionseinheiten 11A von verschiedenen Herstellern mit zugehörigen technischen Informationsdaten ausgeben und der Nutzer hat anschließend die Möglichkeit, eine der vorgeschlagenen Ersatzfunktionseinheiten 11A zu selektieren. Bei einer möglichen Ausführungsform erfolgt somit der Ersetzungsprozess iterativ und/oder interaktiv mit einem Nutzer, wobei die ursprüngliche Schaltung entsprechend dem Schaltplan schrittweise umkonfiguriert wird, bis eine Optimierung der elektrischen Schaltung erzielt worden ist.

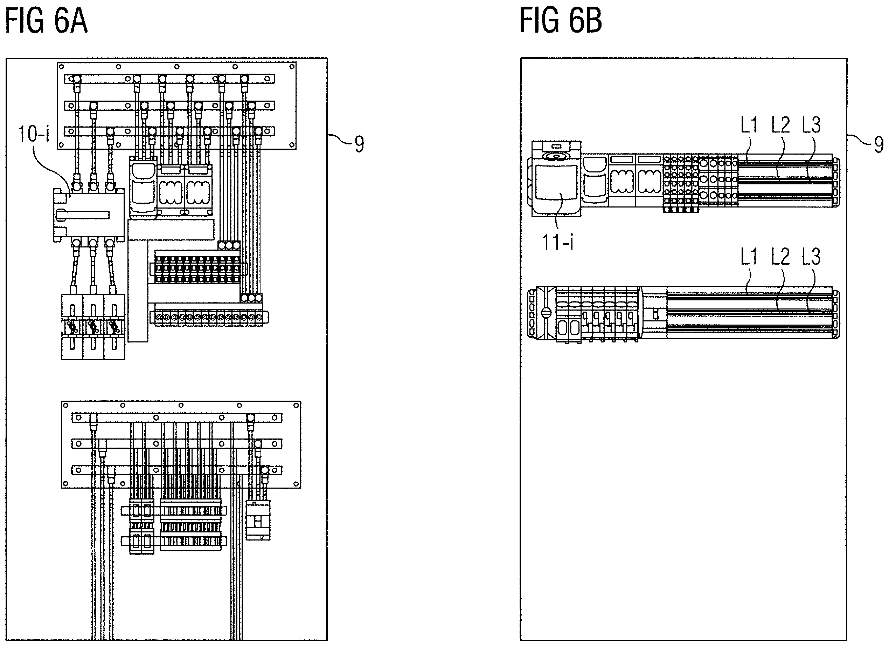

Figuren 6A, 6B zeigen ein Beispiel für die Umkonfigurierung einer elektrischen Schaltung innerhalb eines Schaltschrankes 9 mithilfe des erfindungsgemäßen Konfigurationssystems 1. Fig. 6A zeigt ein Beispiel für eine in einem Schaltschrank 9 implementierte komplexe elektrische Schaltung, bei der eine Vielzahl unterschiedlicher Funktionseinheiten 10 mithilfe von Schienen und Abzweigern bzw. Klemmen miteinander verschaltet sind. Nach erfolgter Umkonfiguration ergibt sich das in Fig. 6B dargestellte Schaltbild. Bei dem dargestellten Beispiel befinden sich alle Funktionseinheiten bzw. Ersatzfunktionseinheiten auf parallel angeordneten Stromsammelschienen L1, L2, L3. Die in Fig. 6B auf den Stromsammelschienen L1, L2, L3 vorgesehenen Ersatzfunktionseinheiten 11-i erfüllen die Funktionsanforderungen des Konfigurators und bilden gleichzeitig die elektrische Schaltungen wie sie im ursprünglichen bereits vorhandenen Schaltschrank 9 verschaltet sind. Wie man aus den Figuren 6A, 6B erkennen kann, kann durch eine Umkonfigurierung der bisherigen elektrischen Schaltung eine erhebliche Platzeinsparung innerhalb des Schaltschrankes 9 erreicht werden. Darüber hinaus sind die Funktionseinheiten bzw. Ersatzfunktionseinheiten bei der Schaltung gemäß Fig. 6B deutlich übersichtlicher angeordnet, sodass Schaltungs-und/oder Bedienungsfehler zum Betreiben des Schaltschrankes 9 vermindert werden. Die Umkonfiguration der in Fig. 6A dargestellten elektrischen Schaltung zur Erzeugung der in Fig. 6B dargestellten elektrischen Schaltung erfolgt dabei weitestgehend halbautomatisch, beispielsweise interaktiv und/oder iterativ bzw. schrittweise. Die in Fig. 6B dargestellte umkonfigurierte Schaltung erfüllt dabei die von dem Nutzer eingegebenen Anforderungen bzw. Optimierungskriterien. Bei einer möglichen Ausführungsform werden die in Fig. 6A dargestellten verschiedenen Funktionseinheiten 10-i anhand von eindeutigen charakteristischen Merkmalen automatisch erkannt, insbesondere anhand von Identifizierungsmerkmalen und/oder äußeren Gestaltungsmerkmalen der verschiedenen Funktionseinheiten 10-i.

Bei einer weiteren möglichen Ausführungsform wird zusätzlich anhand eines charakteristischen Merkmales auch der Typ des bisherigen vorhandenen physikalischen Schaltschrankes 9 automatisch erkannt und bei der Umkonfigurierung bzw. bei dem Ersetzungsvorgang mitberücksichtigt. Bei einer möglichen Ausführungsvariante kann die Konfigurationseinheit 4 auf die Datenbank 8 zugreifen, um verschiedene zugehörige bzw. geeignete Schaltschranktypen auszulesen. Bei einer möglichen Ausführungsvariante kann die Konfigurationseinheit 4 auch einen geeigneten anderen Schaltschrank vorschlagen, welcher den bisherigen Schaltschrank 9 ersetzt, wobei der neue Schaltschrank in der Regel einen geringeren Schaltraum aufweist, um Platz einzusparen und dennoch in der Lage ist, alle notwendigen Ersatzfunktionseinheiten 11-i aufzunehmen.

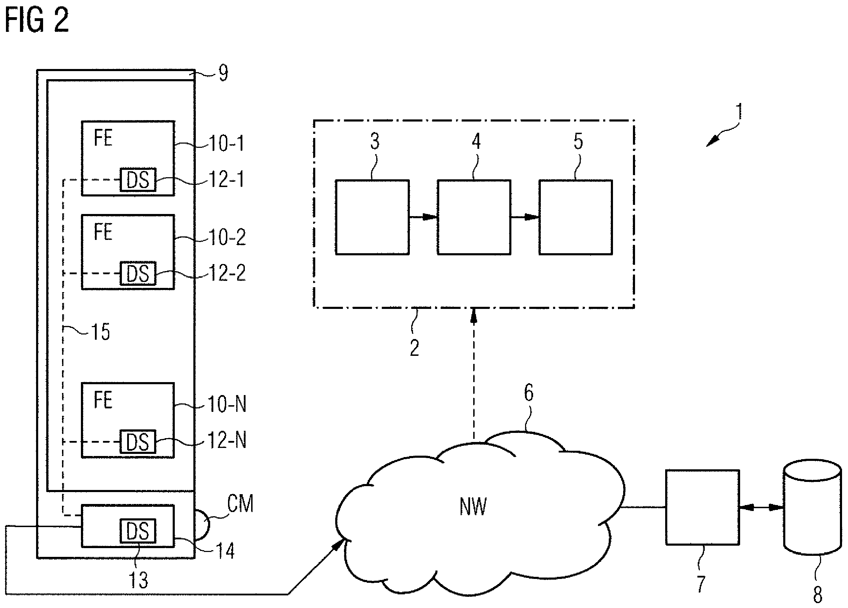

Fig. 2 zeigt eine weitere mögliche Ausführungsform des erfindungsgemäßen Konfigurationssystems 1. Bei der in Fig. 2 dargestellten Ausführungsform hat die Konfigurationseinheit 4 über eine weitere drahtlose Schnittstelle Zugriff auf die Datenspeicher 12-i, die in den auf Tragschienen oder Sammelschienen montierten Funktionseinheiten 10-i vorgesehen sein können. Weiterhin kann die Konfigurationseinheit 4 auf einen Datenspeicher 13 einer Funktionseinheit 14 Zugriff haben, welche innerhalb des Schaltschrankes 9 integriert ist und eine Datenschnittstelle zu dem Datennetzwerk 6 besitzt. Die verschiedenen Datenspeicher der Funktionseinheiten 10-i können bei einer möglichen Ausführungsvariante über einen Datenbus 15 mit der Funktionseinheit 14 des Schaltschrankes 9 verbunden sein, wobei Daten, welche innerhalb der verschiedenen Datenspeicher 12-i gespeichert sind, über den Datenbus 15 an den Datenspeicher 13 des Schaltschrankes 9 automatisch übertragen werden können. Der Schaltschrank 9 weist bei dem dargestellten Ausführungsbeispiel mindestens ein charakteristisches Merkmal CM auf, welches erlaubt, den Schaltschrank 9 zu identifizieren. In den verschiedenen Datenspeichern 12-i der Funktionseinheiten 10-i können Identifizierungsdaten zur Identifizierung der jeweiligen Funktionseinheit, technische Daten zur Beschreibung technischer Eigenschaften der jeweiligen Funktionseinheit, Zustandsdaten zur Beschreibung eines momentanen Zustandes der Funktionseinheit sowie Messdaten gespeichert sein, die durch die jeweilige Funktionseinheit beim Betrieb der Schaltung erzeugt werden. In entsprechender Weise kann der Datenspeicher 13 des Schaltschrankes 9 Identifizierungsdaten zur Identifizierung des Schaltschrankes 9 und/oder technische Daten zur Beschreibung technischer Eigenschaften des Schaltschrankes 9, Zustandsdaten zur Beschreibung eines momentanen Betriebszustandes des Schaltschrankes 9 sowie Messdaten enthalten, die durch eine Funktionseinheit des Schaltschrankes 9 erzeugt werden.

Bei einer möglichen Ausführungsform kann die Erkennungseinheit 3 des Konfigurationssystems 1 Identifizierungsdaten aus den Datenspeichern 12-i, 13 zur Identifizierung des Schaltschrankes 9 und/oder der darin verschalteten Funktionseinheiten über das Netzwerk 6 auslesen und anhand der Identifizierungsdaten die im Schaltschrank 9 montierten Funktionseinheiten 10-i identifizieren. Bei der in Fig. 2 dargestellten Ausführungsform kann die Erkennungseinheit 3 zusätzlich anhand charakteristischer Merkmale der in dem Schaltschrank 9 befindlichen Funktionseinheiten die in dem Schaltschrank 9 verschalteten Funktionseinheiten 10-i sowie deren absolute oder relative Lage zueinander innerhalb des Schaltschrankes 9 erkennen. Beispielsweise kann die Erkennungseinheit 3 Positionskoordinaten der in dem Schaltschrank 9 positionierten Funktionseinheiten 10-i mit einem Koordinatenraster ermitteln und der Konfigurationseinheit 4 zur Umkonfigurierung der Schaltung zuführen. Bei einer möglichen Ausführungsform wird die Abmessung, d.h. die Länge L und Breite B sowie die Tiefe T, des Schaltschrankes 9 ausgemessen und ein zwei- bzw. dreidimensionales Koordinatengitter gebildet, wobei den verschiedenen erkannten Funktionseinheiten 10-i Positionskoordinaten zugeordnet werden. Beispielsweise kann auf diese Weise festgestellt werden, dass die Funktionseinheit 10-i sich an den Koordinaten x1, x2, x3 innerhalb des Schaltschrankes 9 befindet und die Funktionseinheit 10-2 an den Positionskoordinaten x2, y2, y3. Es ist auf diese Weise möglich, die räumliche Struktur bzw. physikalische Verschaltung der Funktionseinheiten 10-i innerhalb des Schaltschrankes 9 zu erfassen und bei der Umkonfigurierung der Schaltung mitzuberücksichtigen. Neben den Koordinaten bzw. Positionskoordinaten der verschiedenen Funktionseinheiten 10-i können zusätzlich Abmessungen, d.h. die Länge, Breite und Höhe, der verschiedenen Funktionseinheiten innerhalb des Koordinatenrasters ermittelt und bei der Berechnung durch die Konfigurationseinheit 4 mitberücksichtigt werden. Beispielsweise werden bevorzugt Funktionseinheiten 10-i mit großem Volumen bzw. Abmessungen durch Ersatzfunktionseinheiten 11-i ersetzt, die einen wesentlich geringeren Bauraum beanspruchen. Bei der in Fig. 2 dargestellten Ausführungsvariante werden die in den Datenspeichern 12, 13 gespeicherten Informationsdaten der verschiedenen Funktionseinheiten 10-i über eine Datenschnittstelle und das Netzwerk 6 ausgelesen. Alternativ können die verschiedenen Datenspeicher auch über eine drahtlose Schnittstelle auf das Nutzergerät 2 direkt ausgelesen werden, beispielsweise mittels Bluetooth, NFC oder RFID.

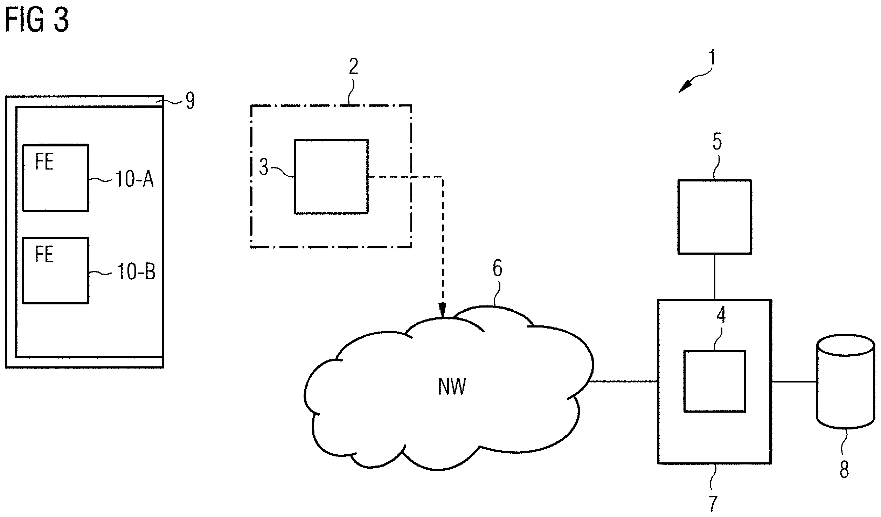

Fig. 3 zeigt eine weitere Ausführungsform des erfindungsgemäßen Konfigurationssystems 1.

Bei der in Fig. 3 dargestellten Ausführungsform befindet sich die Konfigurationseinheit 4 nicht innerhalb des tragbaren Nutzergerätes 2, sondern innerhalb eines an dem Netzwerk 6 vorgesehenen Rechners bzw. Servers 7, der Zugriff auf eine Datenbank 8 hat. Bei dem in Fig. 3 dargestellten Ausführungsbeispiel verfügt das Nutzergerät 2 lediglich über eine Erkennungseinheit 3 zur Erkennung der innerhalb des Schaltschrankes 9 verschalteten bzw. montierten Funktionseinheiten 10-i der elektrischen Schaltung. Die Konfigurationseinheit 4 innerhalb des Rechners 7 berechnet auf Basis der erkannten Funktionseinheiten 10-i, welche sie von der Erkennungseinheit 3 über das Netzwerk 6 erhält, einen elektrischen Schaltplan der innerhalb des Schaltschrankes 9 implementierten elektrischen Schaltung. Anschließend werden die erkannten Funktionseinheiten 10-i zur Berechnung des Schaltplanes zumindest teilweise automatisch durch Ersatzfunktionseinheiten 11-i ersetzt, welche die Konfigurationseinheit 4 direkt aus der lokalen Datenbank 8 ausliest. Die ermittelten Ersatzfunktionseinheiten 11-i werden über eine an dem Rechner 7 vorgesehene Ausgabeeinheit 5 des Konfigurationssystems 1 für einen Nutzer ausgegeben. Weiterhin können die ermittelten Ersatzfunktionseinheiten 11-i bei einer weiteren Ausführungsvariante durch die Konfigurationseinheit 4 über das Netzwerk 6 an eine Ausgabeeinheit 5 des tragbaren Gerätes 2 übertragen und dort einem Nutzer angezeigt werden. Bei einer möglichen Ausführungsvariante wird das tragbare Gerät 2 von einem ersten Nutzer mit sich geführt, der sich unmittelbar vor Ort bei dem umzukonfigurierenden Schaltschrank 9 befindet. Weiterhin kann die Konfigurationseinheit 4 bei einer möglichen Ausführungsvariante über eine Nutzerschnittstelle durch einen zweiten Nutzer bedient werden, der sich entfernt von dem umzukonfigurierenden Schaltschrank 9 befindet. Beispielsweise ist der unmittelbar vor Ort befindliche Nutzer ein Monteur, während der zweite an dem Rechner 7 arbeitende Nutzer ein mit den Schaltschränken vertrauter Experte bzw. Ingenieur ist. Bei der in Fig. 3 dargestellten Ausführungsvariante nimmt der erste User bzw. Nutzer vor Ort die Konfiguration des Schaltschrankes 9 vor Ort auf und überträgt sie über das Netzwerk 6 an den Rechner 7 des Schaltschrankexperten. Der Schaltschrankexperte nimmt bei einer möglichen Ausführungsvariante iterativ und interaktiv schrittweise die Umkonfiguration des Schaltschrankes 9 vor, wobei bei einer möglichen Ausführungsvariante die verschiedenen Umkonfigurationsschritte für den Monteur vor Ort sichtbar bzw. nachvollziehbar sind, da sie über ein Display der Ausgabeeinheit 5 des tragbaren Gerätes 2 dem Monteur angezeigt werden. Bei einer möglichen Ausführungsvariante kann die physikalische Ersetzung der verschiedenen Funktionseinheiten 10-i vor Ort beim Schaltschrank 9 ebenfalls schrittweise erfolgen, indem beispielsweise der Monteur vor Ort angewiesen wird, die beiden bisherigen Funktionseinheiten 10A, 10B durch eine Ersatzfunktionseinheit 11A zu ersetzen entsprechend dem beispielhaften Schaltplan gemäß Fig. 5B. Bei einer möglichen Ausführungsvariante wird in einem Display der Ausgabeeinheit 5 des tragbaren Nutzergerätes 2, welches beispielsweise von einem Monteur vor Ort mitgeführt wird, zusätzlich der schrittweise geänderte Schaltplan angezeigt, sodass der Monteur notwendige Ersetzungen von Funktionseinheiten 10-i durch Ersatzfunktionseinheiten 11-i in einfacher Weise und fehlerfrei vornehmen kann. Dabei kann der Monteur angewiesen werden, notwendige Einstellungen von Funktionsparametern an Funktionseinheiten 10-i und/oder Ersatzfunktionseinheiten 11-i vorzunehmen, um beispielsweise eine Kompatibilität verschiedener Funktionseinheiten bzw. Ersatzfunktionseinheiten untereinander für die gewünschte Funktion zu erzielen. Die Kommunikation zwischen dem Techniker bzw. Monteur vor Ort bei dem Schaltschrank 9 und dem Techniker in dem entfernt befindlichen Konfigurationszentrum an dem Rechner 7 wird bei einer bevorzugten Ausführungsform durch Sprachsteuerung unterstützt. Dabei wird zwischen dem Nutzerendgerät 2 und dem Rechner 7 eine Sprachkommunikationsverbindung über das Netzwerk 6 aufgebaut, sodass sich die beiden Techniker während des Konfigurationsvorganges bzw. Ersetzungsvorganges akustisch unterhalten können.

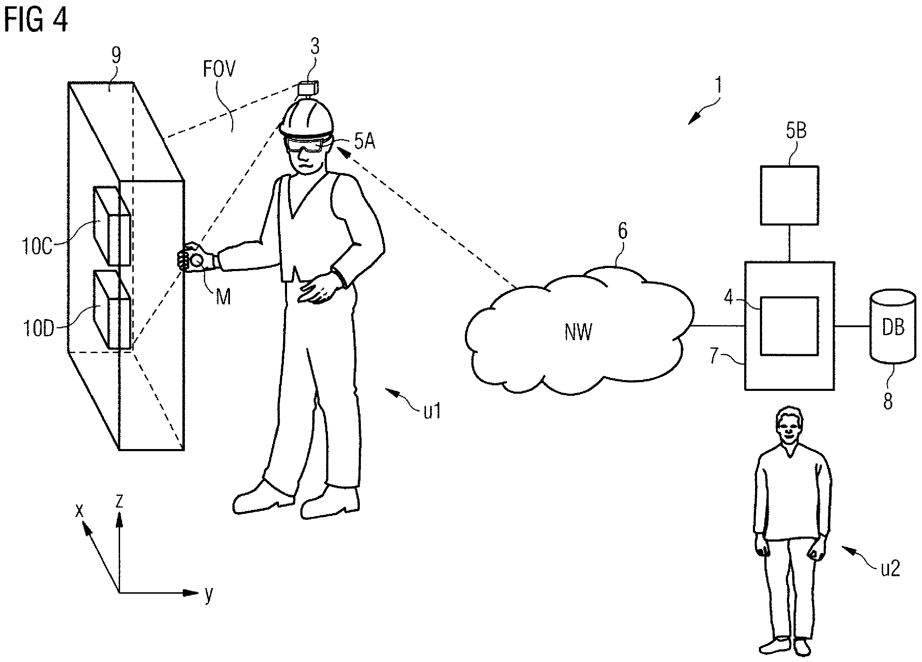

Fig. 4 zeigt ein weiteres Ausführungsbeispiel des erfindungsgemäßen Konfigurationssystems 1. Bei dem dargestellten Beispiel befindet sich ein Nutzer bzw. User Ul, beispielsweise ein Monteur, in der Nähe eines umzukonfigurierenden Schaltschrankes 9 und trägt einen Helm, an dem als Erkennungseinheit 3 eine Kamera montiert ist. Die verschiedenen Funktionseinheiten 10A, 10B innerhalb des Schaltschrankes 9 befinden sich im Sichtfeld FOV der Kamera bzw. Erkennungseinheit 3. Die Kamera 3 liefert eine Sequenz von Kamerabildern über eine Netzwerkschnittstelle, insbesondere eine drahtlose Netzwerkschnittstelle, beispielsweise an einen Access Point des Netzwerkes 6, welche die Kamerabilder an einen entfernt liegenden Server bzw. Rechner 7 des Konfigurationssystems 1 weiterleitet. Mithilfe der Kamera 3 kann der Monteur U1 Fotos von vorne, von hinten und von den Seiten auf die in dem Schaltschrank 9 montierte Schaltung machen, wobei die Schaltschrankverblendungen abmontiert werden können. In dem Rechner 7 ist eine Konfigurationseinheit 4 vorgesehen, die auf Basis der erkannten Funktionseinheiten 10 innerhalb des Schaltschrankes 9 automatisch einen elektrischen Schaltplan ermitteln bzw. berechnen kann und anschließend automatisch die erkannten Funktionseinheiten 10 des berechneten Schaltplanes zumindest teilweise automatisch durch geeignete Ersatzfunktionseinheiten 11 ersetzt, die die Konfigurationseinheit 4 aus der zentralen Datenbank 8 ausliest. Die ermittelten Ersatzfunktionseinheiten 11 können durch eine lokale Ausgabeeinheit 5B an einen Techniker bzw. User U2 ausgegeben werden, welcher die Umkonfiguration vornimmt. Der schrittweise umkonfigurierte Schaltplan, wie er beispielsweise in Fig. 5B dargestellt ist, wird vorzugsweise beiden Nutzern bzw. Technikern U1, U2 angezeigt. Dabei werden die ersetzten Funktionseinheiten vorzugsweise automatisch den realen im Schaltschrank 9 montierten Funktionseinheiten überlagert dargestellt. Der Nutzer erhält somit zusätzlich zu der realen Wahrnehmung weitere Zusatzinformationen, die einen unmittelbaren Bezug zu den optischen Wahrnehmungen haben. Diese Zusatzinformationen umfassen bei dieser Ausführungsform einen optisch überlagerten, beispielsweise umkonfigurierten Schaltplan. Bei dem in Fig. 4 dargestellten Szenario kann der Monteur U1 beispielsweise angewiesen werden, die beiden Funktionseinheiten 10C, 10D durch die Ersatzfunktionseinheiten 11B, 11C zu ersetzen. Bei einer möglichen Ausführungsvariante erhält der Monteur U1 zusätzliche Anweisungen zur Vornahme des Ersetzungsvorganges bzw. zur Montage der ermittelten Ersatzfunktionseinheiten 11B, 11C. Beispielsweise erhält der Monteur U1 Informationen, wie er Ersatzfunktionseinheiten mit bisherigen Funktionseinheiten bzw. anderen Ersatzfunktionseinheiten elektrisch zu verschalten hat und beispielsweise, welche Montagemittel er hierzu verwenden soll. Weiterhin kann der Monteur nach einer erfolgten Ersetzung angewiesen werden, die elektrische Schaltung zumindest teilweise in Betrieb zu setzen, um zu prüfen, ob die Ersetzung bzw. Verschaltung erfolgreich vorgenommen wurde.

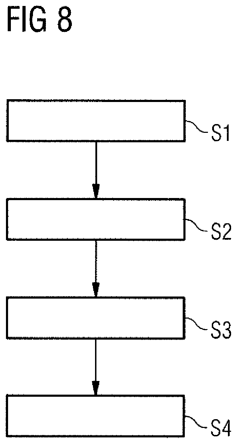

Fig. 8 zeigt ein Ablaufdiagramm zur Darstellung eines Ausführungsbeispiels eines erfindungsgemäßen Verfahrens zur Konfiguration eines Schaltschrankes.

In einem ersten Schritt S1 erfolgt die Erkennung von innerhalb des Schaltschrankes 9 montierter Funktionseinheiten 10 einer elektrischen Schaltung.

In einem weiteren Schritt S2 wird auf Basis der erkannten Funktionseinheiten 10 der elektrischen Schaltung ein elektrischer Schaltplan der elektrischen Schaltung berechnet.

In einem weiteren Schritt S3 werden die erkannten Funktionseinheiten des berechneten Schaltplanes zumindest teilweise automatisch als geeignete Ersatzfunktionseinheiten 11 ersetzt.

In einem weiteren Schritt S4 werden die ermittelten Ersatzfunktionseinheiten 11 ausgegeben.

Das erfindungsgemäße System 1 erlaubt neben einer einfachen fehlerfreien Konfiguration des Schaltschrankes 9 zudem eine präventive Wartung des Schaltschrankes 9. Anhand übermittelter Mess- oder Zustandsdaten ist es möglich, zentral Funktionseinheiten 10 zu identifizieren, die gewartet bzw. ersetzt werden müssen. Weiterhin ist es mithilfe des erfindungsgemäßen Systems 1 möglich, bei Ausfall bzw. Defekt von Funktionseinheiten innerhalb eines Schaltschrankes 9 eine Rückverfolgung durchzuführen, an welcher Stelle und zu welchem Zeitpunkt die defekten Funktionseinheiten 10 hergestellt worden sind, beispielsweise um einen Produktionsprozess zur Herstellung der Funktionseinheiten zu optimieren.

Bei einer möglichen Ausführungsform des erfindungsgemäßen Systems können verschiedene Nutzer bzw. Wartungspersonal jeweils über ein tragbares Nutzergerät 2 verfügen, die über ein Netzwerk 6, beispielsweise das Internet, mit einem zentralen Server 7 eines Herstellers von Schaltschränken und/oder Funktionseinheiten verbunden sind. Bei dieser Ausführungsform kann ein Techniker U2 des Herstellers mit verschiedenen Monteuren bzw. Wartungsleuten U1 kommunizieren, die weltweit eine Vielzahl unterschiedlicher Schaltschränke 9 warten. Das erfindungsgemäße Konfigurationssystem 1 kann sowohl zur Umkonfigurierung bestehender Schaltschränke als auch zur Verwaltung des Funktionsumfanges des bestehenden Schaltschrankes 9 verwendet werden. Weiterhin kann das erfindungsgemäße System 1 zur Neukonfiguration eines bestehenden Schaltschrankes 9 benutzt werden. Das erfindungsgemäße System erlaubt es ferner, eine Online-Dokumentation der vorgenommenen Konfigurationsvorgänge drahtlos bei Hersteller und Kunden durchzuführen. Durch das erfindungsgemäße Konfigurationssystem 1 werden insbesondere Planungs-, Dimensionierungs- und Verdrahtungsfehler weitgehend vermieden, sodass die Umkonfigurierung des Schaltschrankes 9 in wesentlich geringerer Zeit und zuverlässiger durchgeführt werden kann.

Bei einer möglichen weiteren Ausführungsvariante kann anhand des umkonfigurierten elektrischen Schaltplanes mit den ersetzten Ersatzfunktionseinheiten 11 zunächst eine Simulation durchgeführt werden, ob die umkonfigurierte elektrische Schaltung gewisse technische Eigenschaften erfüllt. Erst wenn die Simulation anhand des umkonfigurierten elektrischen Schaltplanes, beispielsweise des in Fig. 5B dargestellten elektrischen Schaltplanes, erfolgreich durchgeführt worden ist, wird der Ersetzungsvorgang zur Ersetzung der bisherigen Funktionseinheiten ausgeführt bzw. angewiesen. Auch hier kann iterativ und interaktiv vorgegangen werden. Ein weiterer Vorteil des erfindungsgemäßen Konfigurationssystems 1 besteht darin, dass die vor Ort eingesetzten Monteure U1 wirksam durch den entfernt arbeitenden Experten U2 unterstützt werden und somit eine im Prinzip geringere technische Qualifikation haben müssen. Bei weiteren möglichen Ausführungsformen werden Ersatzbestellungen für notwendige Ersatzfunktionseinheiten 11, welche beispielsweise defekte Funktionseinheiten 10 innerhalb des Schaltschrankes ersetzen, automatisch ausgelöst, wodurch die Herstellung und/oder ein Transport der benötigten Ersatzfunktionseinheit in einer logistischen Kette automatisch ausgeführt werden kann.

Bei einer weiteren möglichen Ausführungsform des erfindungsgemäßen Konfigurationssystems 1 werden zusätzlich die geografischen Daten bzw. der Standpunkt des Schaltschrankes 9 und/oder des dort befindlichen Monteurs übertragen, sodass die Zusendung der benötigten Ersatzfunktionseinheit 11 automatisch ausgelöst und überwacht werden kann. Dabei kann der Monteur U1 bei einer möglichen Ausführungsform den Fortschritt der Zustellung der Ersatzfunktionseinheit 11 sowie den erwarteten Lieferzeitpunkt mitverfolgen. Hierdurch können wirkungsvoll Ausfallzeiten bei Ausfall eines Schaltschrankes 9 einer technischen Anlage reduziert werden. Das erfindungsgemäße Konfigurationssystem 1 reduziert auf diese Weise nicht nur die notwendige Reparatur- bzw. Ersetzungszeit, sondern auch die Lieferzeit für notwendige Ersatzfunktionseinheiten 11. Bei einer möglichen Ausführungsvariante ist die Ersatzfunktionseinheit 11 in ihrer technischen Funktionalität identisch mit der zu ersetzenden Funktionseinheit 10, weist jedoch nicht die beobachteten Defekte auf. Bei einer weiteren möglichen Ausführungsvariante kann der Monteur U1 vor Ort über weitere Kommunikationskanäle mit dem Hersteller der Funktionseinheiten kommunizieren, beispielsweise mittels E-Mail oder sonstiger Kommunikationsmittel. Die Interaktion zwischen dem Monteur U1 vor Ort beim Schaltschrank 9 und dem Techniker U2 des Herstellers erfolgt vorzugsweise nahezu in Echtzeit. Der Monteur U1 kann gezielt mit Zusatzinformationen versorgt werden, welche ihm eine Hilfestellung bei seiner Wartungs- bzw. Montagearbeit gibt. Bei einer möglichen Ausführungsform werden Planungsdaten mit vorhandenen Zahlengeometrien bzw. Abmessungen abgeglichen. Bei der in Fig. 4 dargestellten Ausführungsform kann der Monteur U1 beispielsweise eine halbtransparente Datenbrille als Ausgabeeinheit 5A tragen. Die in die Ausgabeeinheit 5A eingeblendeten Zusatzinformationen können Text, Grafiken, zweidimensionale oder dreidimensionale Objekte, Animationen oder Videos umfassen.

Bei einer weiteren möglichen Ausführungsvariante kann beispielsweise über die in Fig. 2 dargestellte Datenschnittstelle zwischen dem Netzwerk 6 und der Steuerung 14 des Schaltschrankes 9 während des Montage- und/oder Wartungsvorganges an den zentralen Rechner 7 eine Ansteuerung und/oder Fernüberwachung des Schaltschrankes 9 erfolgen. Beispielsweise kann der Techniker U2 des Herstellers während des Montage-oder Wartungsvorganges per Fernsteuerung sicherstellen, dass die in dem Schaltschrank 9 implementierte Schaltung vollständig ausgeschaltet ist, sodass der Monteur U1 keine spannungsführenden Funktionseinheiten 10 oder Schienen berühren kann. Hierdurch wird die Sicherheit des Wartungs- bzw. Reparaturvorganges erheblich gesteigert. Weiterhin kann bei einer möglichen Ausführungsform der Techniker U2 des zentralen Herstellers anhand durch die Steuerung 14 erhaltener Daten den Fortschritt eines Umkonfigurierungs- oder Wartungs- bzw. Reparaturvorganges mitverfolgen. Hat beispielsweise der Monteur U1 einen Funktionsparameter einer Funktionseinheit 10-i oder einer Ersatzfunktionseinheit 11-i vor Ort falsch eingestellt, kann dies der Monteur U2 des Herstellers am Server 7 anhand der empfangenen Daten, beispielsweise Messdaten, erkennen und den vor Ort befindlichen Monteur U1 unmittelbar anweisen, die Einstellung zu ändern bzw. nachzujustieren. Bei einer weiteren möglichen Ausführungsvariante werden die Messdaten bzw. die Überwachungsdaten zusätzlich an die Ausgabeeinheit 5 des von dem Monteur U1 mitgeführten Nutzergerätes 2 übermittelt. Bei dieser Ausführungsvariante kann der Monteur U1 somit selbst unmittelbar kontrollieren, ob die von ihm vorgenommenen Änderungen an der richtigen Funktionseinheit 10 in korrekter Weise durchgeführt worden sind. Beispielsweise kann ein Monteur U1 angewiesen werden, einen Funktionsparameter, beispielsweise einen Stromwert, auf einen bestimmten Sollwert einzustellen, beispielsweise auf 10 A. Der Monteur U1 nimmt die entsprechende Einstellung an der angewiesenen Funktionseinheit 10-i vor und erhält von der Steuerung 14 des Schaltschrankes 9 über die Datenschnittstelle und das Netzwerk 6 Messdaten, die ihm den von ihm tatsächlich eingestellten Stromwert anzeigen. Der Monteur U1 kann anschließend die Einstellung so lange nachjustieren, bis die Messdaten mit dem vorgegebenen Sollwert übereinstimmen. Alternativ können die Messdaten auch direkt von den Funktionseinheiten 10 über eine drahtlose Schnittstelle an eine Empfangseinheit des Nutzergerätes 2 übermittelt werden.

Das erfindungsgemäße System 1 kann bei einer weiteren möglichen Ausführungsform anhand der Standortdaten standortspezifische Funktionen bereitstellen. Bei einer möglichen Ausführungsvariante kann das Nutzergerät 2 mithilfe eines GPS-Empfängers seinen aktuellen Standort bestimmen. Bei einer weiteren möglichen Ausführungsvariante verfügt auch der Schaltschrank 9 über einen GPS-Empfänger zur Ermittlung seines Standortes. Bei einer weiteren möglichen Ausführungsvariante erfolgt die Unterstützung des Bedieners bzw. Monteurs U1 vor Ort in Abhängigkeit von dem ermittelten Standort des Schaltschrankes 9 und/oder des Nutzergerätes 2. Befindet sich beispielsweise der Schaltschrank 9 und/oder der Monteur U1 in Brasilien, werden die ihm zugeführten Informationen bzw. Informationsdaten vorzugsweise in der Landessprache, nämlich Portugiesisch, seitens des zentralen Rechners 7 des Herstellers zugeführt. Der Nutzer bzw. Monteur erhält somit Zusatzinformationen und/oder Anweisungen in der ihm geläufigen Landessprache.

Weiterhin sind verschiedene Funktionseinheiten 10 oder Ersatzfunktionseinheiten 11 nur in bestimmten Ländern bzw. Staaten, beispielsweise aufgrund der dort vorhandenen Betriebsfrequenzen des Stromversorgungsnetzes, einsetzbar. Beispielsweise beträgt die Betriebsfrequenz 1 des Stromversorgungsnetzes in Europa 50 Hz, während die Betriebsfrequenz f des Stromversorgungsnetzes in den USA 60 Hz beträgt. Eine Ersatzfunktionseinheit 11 muss als Standortanforderung für die am Standort verwendete Betriebsfrequenz des Stromversorgungsnetzes geeignet bzw. ausgelegt sein. Bei einer bevorzugten Ausführungsform werden daher bei der Selektion von Ersatzfunktionseinheiten 11 für zu ersetzende, beispielsweise defekte Funktionseinheiten 10 auch Standortkoordinaten des Schaltschrankes 9 mitberücksichtigt, d.h. in welchem Land sich der betreffende Schaltschrank 9 befindet. Befindet sich beispielsweise ein Schaltschrank 9 in einem Staat A und muss eine Funktionseinheit 10-i ersetzt werden, wird beispielsweise eine für diesen Staat geeignete Ersatzfunktionseinheit 11-i automatisch ausgewählt und nicht eine für diesen Staat ungeeignete Ersatzfunktionseinheit. Bei einer weiteren möglichen Ausführungsvariante werden bestimmte von den Funktionseinheiten 10 und/oder Ersatzfunktionseinheiten 11 bereitgestellte Funktionen zur Überprüfung der Funktionseinheit der elektrischen Schaltung automatisch ausgelöst, beispielsweise eine Start-Stopp-Messung. Weiterhin können während des Wartungs- bzw. Montagevorganges dem Monteur U1 Fehlermeldungen und/oder Warnmeldungen als Zusatzinformationen zugeführt werden. Erkennt beispielsweise das System, dass ein Schaltschrank 9 noch nicht ausgeschaltet worden ist, kann der vor Ort befindliche Monteur U1 gewarnt werden, dass die Ausschaltung des Schaltschrankes 9 noch nicht erfolgt ist.

Weitere Ausführungsformen des erfindungsgemäßen Konfigurationssystems 1 sind möglich. Bei einer möglichen Ausführungsvariante ist der Schaltschrank 9 eines Anlagenbetreibers mit einer lokalen Datenbank des Anlagenbetreibers verbunden. In der lokalen Datenbank des Anlagenbetreibers befinden sich bei einer möglichen Ausführungsform Datenmodelle und/oder Datensätze, welche die verschiedenen in dem Schaltschrank 9 des Anlagenbetreibers verschalteten Funktionseinheiten 10 technisch beschreiben und insbesondere Identifizierungsdaten und technische Daten zur Beschreibung technischer Eigenschaften der Funktionseinheiten 10 und/oder des jeweiligen Schaltschrankes 9 umfassen. Bei einer möglichen Ausführungsform hat die Konfigurationseinheit 4 über ein Datennetzwerk Zugriff auf die lokale Datenbank des Anlagenbetreibers bzw. Kunden. Die in der lokalen Datenbank des Anlagenbetreibers gespeicherten Zusatzinformationen können durch die Konfigurationseinheit 4 bei der Ersetzung der in dem Schaltschrank 9 montierten Funktionseinheiten 10 durch Ersatzfunktionseinheiten 11 mitberücksichtigt werden.

Bei einer weiteren möglichen Ausführungsform kann der Monteur 5A, der den Ersetzungsvorgang an dem Schaltschrank 9 manuell vornimmt, spezielle Handschuhe tragen, die Marker M aufweisen, welche durch die Erkennungseinheit 3 bzw. die Kamera 3 erkannt werden. Auf diese Weise kann durch den Monteur U1 durch das Display der 3D-Brille 5A visuell mitverfolgt werden, an welcher Stelle sich seine Hände während des Montagevorganges relativ zu den Funktionseinheiten 10 des projizierten Schaltplanes momentan befinden. Beispielsweise kann der in Fig. 4 dargestellte Monteur U1 erkennen, dass sich seine rechte Hand gerade vor der Funktionseinheit 10C des Schaltplanes befindet. Hierdurch können Verwechslungen der Funktionseinheiten 10 durch den Monteur U1 bei dem Montagevorgang verhindert werden. Weiterhin kann bei einer möglichen Ausführungsform der technische Experte U2 mithilfe der an den Handschuhen angebrachten Marker M erkennen, welche Funktionseinheiten 10 der elektrischen Schaltung durch den Monteur U1 vor Ort gerade eingestellt bzw. angefasst werden. Hierdurch ist es dem entfernten Techniker U2 des Herstellers möglich, dem vor Ort agierenden Monteur U1 gezielte Anweisungen bzw. Hilfestellungen zu geben.

Die Erfindung schafft gemäß einem weiteren Aspekt somit eine Montageausrüstung zur Montage bzw. Umkonfiguration bei einem Schaltschrank 9, bei der ein Monteur U1 als Erkennungseinheit eine Kamera 3 trägt, die beispielsweise an einem Helm des Monteurs montiert ist. Neben der Kamera 3 trägt der Monteur eine 3D-Brille mit Display 5A. Darüber hinaus umfasst die spezielle Montageausrüstung Handschuhe mit Markierungen bzw. Markern M, die durch die Kamera 3 während des Montagevorganges erfasst werden können.

Die Erkennungseinheit 3 des Konfigurationssystems dient zur Erkennung von Objekten, insbesondere von Funktionseinheiten innerhalb des Schaltschrankes 9. Die Erkennungseinheit 3 liefert Daten an die Konfigurationseinheit 4. In einer möglichen Ausführungsform sind neben der Erkennungseinheit 3 weitere Datenquellen vorhanden, welche bei der Erkennung von Objekten bzw. Funktionseinheiten ausgewertet werden. In einer möglichen Ausführungsform werden zur Erkennung von Objekten, insbesondere Funktionseinheiten zusätzlich Schaltpläne, Stücklisten, Konstruktionsdaten, insbesondere E-Plan-Daten, sowie weitere Bilddaten ausgewertet.

In bestehenden Schaltschränken können Funktionseinheiten verschiedener Hersteller verbaut sein. In solchen Fällen können insbesondere Stücklisten eine Erkennung der innerhalb des Schaltschrankes montierten Funktionseinheiten vereinfachen. Die Stückliste, der Schaltplan sowie weitere Konstruktionsdaten die verbauten Funktionseinheiten können in einer möglichen Ausführungsform über eine Datenschnittstelle eingelesen werden.

Das erfindungsgemäße Konfigurationssystem erlaubt eine exakte Identifikation sowie ein Tracking von Komponenten bzw. Funktionseinheiten. Dabei können in einer möglichen Ausführungsform Trackingverfahren mit aktiven und passiven Markern eingesetzt werden. Vorzugsweise werden in einer alternativen Ausführungsform markerlose Trackingverfahren eingesetzt, da die Verwendung von Markern wie beispielsweise QR-Codes oder RFID-Tags zwar eine vereinfachte Identifizierung von Komponenten bzw. Funktionseinheiten erlauben, jedoch den Nachteil nach sich ziehen, dass eine Nachrüstung an den Komponenten bzw. Funktionseinheiten erforderlich ist. Zudem können Marker während des Betriebes einer Maschine verschmutzen oder beispielsweise durch Vibrationen abfallen. Aus diesem Grunde wird bei einer bevorzugten Ausführungsform des erfindungsgemäßen Konfigurationssystems ein Bilderkennungsverfahren eingesetzt, das insbesondere mittels maschinellen Lernens automatisiert bekannte Komponenten bzw. Funktionseinheiten ohne den Einsatz von Markern im industriellen Anwendungsfeld identifiziert.

Um eine lückenlose Objekterkennung und Identifizierung im industriellen Umfeld zu ermöglichen, erfolgt vorzugsweise eine Erweiterung der Objekterkennung durch ein virtuelles Objektdatenmodell. Dieses Objektdatenmodell integriert eine geometrische Repräsentation der physischen Eigenschaften sowie zu dem Objekt zugehörige Meta-Daten, um ein anwendungsspezifisches und virtuell nutzbares Datenmodell bereitzustellen. Eine geometrische Repräsentation lässt sich beispielsweise aus Konstruktionsdaten von Produkten bzw. Funktionseinheiten ableiten. Als Konstruktionsdaten dienen beispielsweise als Non Uniform Rational B Splines (NURBS), die von 3D CAD Systemen erzeugt werden können. Im Unterschied zu polygonbasierten Objekterepräsentationen erlauben NURBS-Datenmodelle mittels definierter Kurven und Flächen eine exakte geometrische Repräsentation von Objekten. Die durch das Objektmodell verfügbaren zusätzlichen Informationen ermöglichen die Identifikation einzelner Bauteile einer Anlage über ein Mapping zu dem hinterlegten virtuellen Komponentenmodell bzw. Objektdatenmodell.

Die konfigurierte bzw. umkonfigurierte Schaltung, die durch das Konfigurationssystem 1 erzeugt wird, kann bei einer möglichen Ausführungsform mithilfe eines Markers auf eine Projektionsfläche projiziert werden. Bei diesem Marker handelt es sich beispielsweise um einen im Schaltschrank vorgesehenen Aufkleber oder dgl. Mithilfe des erfindungsgemäßen Konfigurationssystems ist es auch möglich auf Basis von Kundenvorgaben eine Konfiguration eines Schaltschrankes gezielt vorzunehmen. Das erfindungsgemäße Konfigurationssystem kann von verschiedenen Anwendern benutzt werden, beispielsweise bei der Beratung von Anlagenbetreibern, bei der Anlagenplanung oder bei der Wartung oder Reparatur von Anlagen.
Das Konfigurationssystem bzw. der Konfigurator kann in einer möglichen Ausführungsform an eine Applikation gebunden sein, welche beispielsweise auf einem mobilen Telefon implementiert ist. Hierdurch kann eine Konfiguration in einer Kundenumgebung, beispielsweise die Konfiguration eines Schaltschrankes eines Kunden, durch das Konfigurationssystem simuliert werden. Hierzu können Weltkoordinaten, für die geladenen 3D Objekte und deren Positionen im Raum übermittelt werden. Nach dem Starten der APP bzw. Applikation wird in einer möglichen Ausführungsform in einem Augmented Reality (AR)-Modus die Erkennung von Komponenten bzw. Funktionseinheiten oder Baugruppen automatisch durchgeführt. Beispielsweise kann eine Baugruppe bzw. eine Funktionseinheit, die in dem Schaltschrank verbaut ist, ausgewählt werden, wobei beispielsweise automatisch eine Nachbestellung der ausgewählten Funktionseinheit erfolgt. Beispielsweise wird auf einem Display eines Handys das Innere eines Schaltschrankes angezeigt. Der Nutzer kann beispielsweise ein auf dem Display angezeigtes Bauelement bzw. Funktionseinheit auswählen, indem er beispielsweise einen Finger auf das betreffende angezeigte Bauelement drückt.

In einer weiteren möglichen Ausführungsform können bestimmte Messdaten aus einem selektierten Bauelement bzw. einer selektierten Funktionseinheit, welche innerhalb des Schaltschrankes verbaut ist, ausgelesen werden und durch die Berechnungseinheit analysiert werden. Das Auslesen der Messdaten erfolgt dabei vorzugsweise drahtlos beispielsweise mittels NFC oder Bluetooth. Beispielsweise können bestimmte Messdaten der Funktionseinheit statistisch ausgewertet werden und die Auswerteergebnisse auf einem Display des Handys angezeigt werden.

Bei einer weiteren möglichen Ausführungsform kann ein als defekt erkanntes Bauteil bzw. Funktionseinheit gemeldet werden. Wird beispielsweise ein Bauteil bzw. eine Funktionseinheit anhand von Messdaten oder in sonstiger Weise als defekt erkannt, kann ein Nutzer beispielsweise eine Kamera des Handys vor das defekte Bauteil halten und das auf dem Display des Handys angezeigte defekte Bauteil melden, indem er seinen Finger auf das angezeigte defekte Bauteil presst und somit eine entsprechende Meldung an das System auslöst.

Ein Scan der im Schaltschrank verbauten Bauteile bzw. Funktionseinheiten kann einerseits bei der Augmented Reality - Erkennung bzw. Bilderkennung erfolgen und andererseits zusätzlich oder alternativ mithilfe von Bluetooth oder NFC. Das System kann mögliche Fehler bzw. Defekte in einer möglichen Ausführungsform mittels eines aktiven Datenabgleiches mit einer Datenbank erkennen. In einer möglichen Ausführungsform werden hierzu zusätzlich Messdaten ausgewertet, welche aus den Funktionseinheiten und/oder dem Schaltschrank ausgelesen werden. In einer möglichen Ausführungsform kann ein Schaltschrank-Layout per Internet aus einer Kundendatenbank abgerufen werden. Weiterhin können Kundenkonfigurationen oder beispielsweise gespeicherte Angebote abgerufen werden. Diese Daten können zusätzlich zur Erkennung der innerhalb eines Schaltschrankes verbauten Baugruppen bzw. Funktionseinheiten ausgewertet werden. Weitere Daten bzw. Informationen über industrielle Geräte bzw. Komponenten oder Funktionseinheiten können in einer möglichen Ausführungsform auf Grundlage einer dezentralen Wissensbasis bereitgestellt werden, die von den Nutzern des Systems gepflegt wird.

### Bezugszeichenliste

- 1: Konfigurationssystem
- 2: Nutzergerät
- 3: Erkennungseinheit
- 4: Konfigurationseinheit
- 5: Ausgabeeinheit
- 5A, 5B: Ausgabeeinheit
- 6: Netzwerk
- 7: Server
- 8: Datenbank
- 9: Schaltschrank
- 10: Funktionseinheit
- 11: Ersatzfunktionseinheit
- 12: Datenspeicher
- 13: Datenspeicher
- 14: Schaltschranksteuerung

## Patentansprüche

1. Konfigurationssystem (1) zur Umkonfiguration eines Schaltschrankes (9) mit:
(a) einer Erkennungseinheit (3), die dazu ausgebildet ist, innerhalb eines Schaltschrankes (9) montierte Funktionseinheiten (10) einer elektrischen Schaltung anhand charakteristischer Merkmale der Funktionseinheiten (10), welche eindeutige durch die Erkennungseinheit (3) ausgelesene Identifizierungsmerkmale aufweisen, zu erkennen, und
wobei die Erkennungseinheit (3) dazu ausgebildet ist, die durch die Funktionseinheiten (10) implementierte elektrische Schaltung zu erkennen;
(b) einer Konfigurationseinheit (4), die einen Prozessor enthält, der dazu ausgebildet ist, auf Basis der anhand der charakteristischen Merkmale erkannten Funktionseinheiten (10) der elektrischen Schaltung und auf Basis der erkannten implementierten elektrischen Schaltung einen elektrischen Schaltplan der elektrischen Schaltung zu berechnen und die erkannten Funktionseinheiten (10) des berechneten Schaltplans in Hinblick auf mindestens ein Optimierungskriterium automatisch durch zugehörige Ersatzfunktionseinheiten (11), die in einer Datenbank (8) des Konfigurationssystems (1) gespeichert sind, zu ersetzen,
wobei das Optimierungskriterium aufweist:
einen benötigten Bauraum der Ersatzfunktionseinheiten (11) innerhalb des Schaltschrankes (9),
eine Wärmeentwicklung durch die Ersatzfunktionseinheiten (11) innerhalb des Schaltschrankes (9),
eine Wärmeabfuhr durch die Ersatzfunktionseinheiten (11),
eine Erfüllung von vorgegebenen Zertifizierungsanforderungen durch die Ersatzfunktionseinheiten (11),
eine Erfüllung von vorgegebenen Leistungsanforderungen und/oder Standortanforderungen durch die Ersatzfunktionseinheiten (11);
(c) einer Ausgabeeinheit (5), die dazu ausgebildet ist, die ermittelten Ersatzfunktionseinheiten (11) auszugeben.

2. Konfigurationssystem nach Anspruch 1,
wobei die Konfigurationseinheit (4) über eine Schnittstelle Zugriff auf die Datenbank (8) hat, die Funktionseinheiten (10) und zugehörige Ersatzfunktionseinheiten (11) sowie verschiedene Schaltschranktypen speichert.

3. Konfigurationssystem nach Anspruch 1 oder 2,
wobei die Erkennungseinheit (3) dazu ausgebildet ist, eine innerhalb des Schaltschrankes (9) montierte Funktionseinheit (10) der elektrischen Schaltung anhand mindestens eines charakteristischen Merkmales der Funktionseinheit (10), das ein eindeutiges durch die Erkennungseinheit (3) ausgelesenes Identifizierungsmerkmal der Funktionseinheit (10) und ein äußeres Gestaltungsmerkmal der Funktionseinheit (10) aufweist, automatisch zu erkennen.

4. Konfigurationssystem nach einem der vorangehenden Ansprüche 1 bis 3,
wobei die Erkennungseinheit (3), die Konfigurationseinheit (4) und die Ausgabeeinheit (5) in einem tragbaren Nutzergerät (2) integriert sind.

5. Konfigurationssystem nach Anspruch 4,
wobei das Nutzergerät (2) eine drahtlose Schnittstelle zum Auslesen von Daten aus Datenspeichern (12) der in dem Schaltschrank (9) montierten Funktionseinheiten (10) und/oder aus einem Datenspeicher (13) des Schaltschrankes (9) aufweist.

6. Konfigurationssystem nach einem der vorangehenden Ansprüche 1 bis 5,
wobei die Erkennungseinheit (3) mindestens einen Sensor zur optischen Erfassung der innerhalb des Schaltschrankes (9) montierten Funktionseinheiten (10) aufweist, der Bilder der montierten Funktionseinheiten (10) an die Konfigurationseinheit (4) des Konfigurationssystems (1) liefert.

7. Konfigurationssystem nach einem der vorangehenden Ansprüche 1 bis 6,
wobei die Konfigurationseinheit (4) eine Berechnungseinheit aufweist, die geometrische Abmessungen und/oder Abstände der innerhalb des Schaltschrankes (9) montierten Funktionseinheiten auf Grundlage der von der Erkennungseinheit (3) erhaltenen Bilder der innerhalb des Schaltschrankes (9) montierten Funktionseinheiten (10) automatisch berechnet, wobei die geometrischen Abmessungen und/oder Abstände bei der Optimierung der innerhalb des Schaltschrankes (9) montierten Schaltung in Hinblick auf ein Optimierungskriterium Bauraum ausgewertet werden.

8. Konfigurationssystem nach einem der vorangehenden Ansprüche 1 bis 7,
wobei die Ausgabeeinheit (5) des Konfigurationssystems (1) ein Display aufweist, das die ermittelten Ersatzfunktionseinheiten (11) zusammen mit den nicht ersetzten ursprünglichen Funktionseinheiten (10) in einem virtuell montierten Zustand in dem Schaltschrank (9) projiziert anzeigt.

9. Konfigurationssystem nach einem der vorangehenden Ansprüche 4 bis 8,
wobei das tragbare Nutzergerät (2) als Ausgabeeinheit (5) eine dreidimensionale Brille mit Display aufweist.

10. Verfahren zur Umkonfiguration eines Schaltschrankes (9) mit den folgenden Schritten:
(a) Erkennen (S1) von Funktionseinheiten (10) einer elektrischen Schaltung, die innerhalb eines Schaltschrankes (9) montiert sind, anhand charakteristischer Merkmale der Funktionseinheiten (10), welche eindeutige durch eine Erkennungseinheit (3) ausgelesene Identifizierungsmerkmale aufweisen, und Erkennen der durch die Funktionseinheiten (10) implementierten elektrischen Schaltung;
(b) Berechnen (S2) eines elektrischen Schaltplanes der elektrischen Schaltung auf Basis der automatisch erkannten Funktionseinheiten (10) und auf Basis der erkannten implementierten elektrischen Schaltung;
(c) Ersetzen (S3) der automatisch erkannten Funktionseinheiten (10) des berechneten Schaltplanes durch zugehörige Ersatzfunktionseinheiten (11), die in einer Datenbank (8) gespeichert sind in Hinblick auf ein Optimierungskriterium, wobei das Optimierungskriterium aufweist:
einen benötigten Bauraum der Ersatzfunktionseinheiten (11) innerhalb des Schaltschrankes (9),
eine Wärmeentwicklung durch die Ersatzfunktionseinheiten (11) innerhalb des Schaltschrankes (9),
eine Wärmeabfuhr durch die Ersatzfunktionseinheiten (11),
eine Erfüllung von vorgegebenen Zertifizierungsanforderungen durch die Ersatzfunktionseinheiten (11) und/oder
eine Erfüllung von vorgegebenen Leistungsanforderungen und/oder Standortanforderungen durch die Ersatzfunktionseinheiten (11);
(d) Ausgeben (S4) der ermittelten Ersatzfunktionseinheiten (11).

## Claims

1. Configuration system (1) for reconfiguring a switch cabinet (9), comprising:
(a) a detection unit (3) configured to detect functional units (10) of an electrical circuit which are mounted within a switch cabinet (9) by way of characteristic features of the functional units (10), which have unique identifying features which are read out by the detection unit (3), and
the detection unit (3) being formed to detect the electrical circuit implemented by the functional units (10) ;
(b) a configuration unit (4) including a processor configured to calculate an electrical circuit diagram of the electrical circuit on the basis of the functional units (10) of the electrical circuit which are detected by way of the characteristic features and on the basis of the detected implemented electrical circuit, and automatically to replace the detected functional units (10) of the calculated circuit diagram with associated replacement functional units (11), which are stored in a database (8) of the configuration system (1), with a view to at least one optimisation criterion,
wherein the optimisation criterion includes:
a required installation space of the replacement functional units (11) within the switch cabinet (9),
a development of heat by the replacement functional units (11) within the switch cabinet (9),
a dissipation of heat by the replacement functional units (11),
fulfilment of predetermined certification requirements by the replacement functional units (11),
fulfilment of predetermined power requirements and/or location requirements by the replacement functional units (11);
(c) an output unit (5) configured to output the determined replacement functional units (11).

2. Configuration system according to claim 1,
wherein the configuration unit (4) has access via an interface to the database (8), which stores functional units (10) and associated replacement functional units (11) as well as different switch cabinet types.

3. Configuration system according to either claim 1 or claim 2,
wherein the detection unit (3) is configured to detect a functional unit (10) of the electrical circuit, which is mounted inside the switch cabinet (9), automatically by way of at least one characteristic feature of the functional unit (10), which includes a unique identifying feature of the functional unit (10) which is read out by the detection unit (3) and an external design feature of the functional unit (10) .

4. Configuration system according to any of preceding claims 1 to 3,
wherein the detection unit (3), the configuration unit (4) and the output unit (5) are integrated into a portable user device (2).

5. Configuration system according to claim 4,
wherein the user device (2) has a wireless interface for reading out data from data stores (12) of the functional units (10) mounted in the switch cabinet (9) and/or from a data store (13) of the switch cabinet (9).

6. Configuration system according to any of preceding claims 1 to 5,
wherein the detection unit (3) has at least one sensor for optical detection of the functional units (10) mounted inside the switch cabinet (9), said sensor supplying images of the mounted functional units (10) to the configuration unit (4) of the configuration system (1).

7. Configuration system according to any of preceding claims 1 to 6,
wherein the configuration unit (4) has a computation unit, which automatically calculates geometric dimensions and/or spacings of the functional units mounted inside the switch cabinet (9) on the basis of the images, acquired by the detection unit (3), of the functional units (10) mounted inside the switch cabinet (9), the geometric dimensions and/or spacings being evaluated with a view to an optimisation criterion of installation space in the optimisation of the circuit mounted inside the switch cabinet (9).

8. Configuration system according to any of claim 1 to 7,
wherein the output unit (5) of the configuration system (1) has a display which displays the determined replacement functional units (11) projected in a virtually mounted state in the switch cabinet (9) together with the non-replaced original functional units (10).

9. Configuration system according to any of claims 4 to 8,
wherein the portable user device (2) has as an output unit (5) a pair of three-dimensional glasses comprising a display.

10. Method for reconfiguring a switch cabinet (9), comprising the following steps:
(a) detecting (S1) functional units (10) of an electrical circuit which are mounted within a switch cabinet (9) by way of characteristic features of the functional units (10), which have unique identifying features which are read out by a detection unit (3), and detecting the electrical circuit implemented by the functional units (10) ;
(b) calculating (S2) an electrical circuit diagram of the electrical circuit on the basis of the automatically detected functional units (10) and on the basis of the detected implemented electrical circuit;
(c) replacing (S3) the automatically detected functional units (10) of the calculated circuit diagram with associated replacement functional units (11), which are stored in a database (8), with a view to at least one optimisation criterion, wherein the optimisation criterion includes:
a required installation space of the replacement functional units (11) within the switch cabinet (9),
a development of heat by the replacement functional units (11) within the switch cabinet (9),
a dissipation of heat by the replacement functional units (11),
fulfilment of predetermined certification requirements by the replacement functional units (11), and/or
fulfilment of predetermined power requirements and/or location requirements by the replacement functional units (11);
(d) outputting (S4) the determined replacement functional units (11).

## Revendications

1. Système de configuration (1) destiné à la reconfiguration d'une armoire électrique (9) comportant :
(a) une unité de détection (3), laquelle est configurée pour détecter des unités fonctionnelles (10) d'un circuit électrique montées à l'intérieur d'une armoire électrique (9) à l'aide d'attributs caractéristiques des unités fonctionnelles (10), lesquelles présentent des attributs d'identification lus de façon univoque par l'unité de détection (3), et
dans lequel l'unité de détection (3) est configurée pour détecter le circuit électrique implémenté par les unités fonctionnelles (10) ;
(b) une unité de configuration (4) comprenant un processeur, lequel est configuré pour calculer un schéma électrique du circuit électrique sur la base des unités fonctionnelles (10) du circuit électrique détectées à l'aide des attributs caractéristiques et sur la base du circuit électrique implémenté détecté et pour remplacer automatiquement, en tenant compte d'au moins un critère d'optimisation, les unités fonctionnelles (10) détectees du schéma électrique calculé par des unités fonctionnelles de remplacement (11) associées, lesquelles sont enregistrées dans une base de données (8) du système de configuration (1),
dans lequel le critère d'optimisation présente :
un espace d'installation requis des unités fonctionnelles de remplacement (11) à l'intérieur de l'armoire électrique (9),
une production de chaleur par les unités fonctionnelles de remplacement (11) à l'intérieur de l'armoire électrique (9),
une dissipation de chaleur par les unités fonctionnelles de remplacement (11),
un respect par les unités fonctionnelles de remplacement (11) d'exigences de certification prédéfinies,
un respect par les unités fonctionnelles de remplacement (11) d'exigences de performance et/ou d'exigences de site prédéfinies ;
(c) une unité de sortie (5), laquelle est configurée pour la sortie des unités fonctionnelles de remplacement (11) déterminées.

2. Système de configuration selon la revendication 1,
dans lequel l'unité de configuration (4) a accès par le biais d'une interface à la base de données (8), laquelle enregistre les unités fonctionnelles (10) et les unités fonctionnelles de remplacement (11) associées ainsi que différents types d'armoire électrique.

3. Système de configuration selon la revendication 1 ou 2,
dans lequel l'unité de détection (3) est configurée pour détecter automatiquement une unité fonctionnelle (10) du circuit électrique montée à l'intérieur de l'armoire électrique (9) à l'aide d'au moins un attribut caractéristique de l'unité fonctionnelle (10), lequel présente un attribut d'identification de l'unité fonctionnelle (10) lu de façon univoque par l'unité de détection (3) et une caractéristique de conception externe de l'unité fonctionnelle (10).

4. Système de configuration selon l'une des revendications précédentes 1 à 3,
dans lequel l'unité de détection (3), l'unité de configuration (4) et l'unité de sortie (5) sont intégrées dans un équipement utilisateur portable (2).

5. Système de configuration selon la revendication 4,
dans lequel l'équipement utilisateur (2) présente une interface sans fil destinée à lire des données à partir de mémoires de données (12) des unités fonctionnelles (10) montées à l'intérieur de l'armoire électrique (9) et/ou à partir d'une mémoire de données (13) de l'armoire électrique (9) .

6. Système de configuration selon l'une des revendications précédentes 1 à 5,
dans lequel l'unité de détection (3) présente au moins un capteur pour la saisie optique des unités fonctionnelles (10) montées à l'intérieur de l'armoire électrique (9), lequel fournit des images des unités fonctionnelles (10) montées à l'unité de configuration (4) du système de configuration (1).

7. Système de configuration selon l'une des revendications précédentes 1 à 6,
dans lequel l'unité de configuration (4) comporte une unité de calcul, laquelle calcule automatiquement des distances et/ou des dimensions géométriques des unités fonctionnelles montées à l'intérieur de l'armoire électrique (9) en se basant sur les images des unités fonctionnelles (10) montées à l'intérieur de l'armoire électrique (9) obtenues par l'unité de détection (3), dans lequel, lors de l'optimisation du circuit monté à l'intérieur de l'armoire électrique (9), les distances et/ou les dimensions géométriques sont analysées en tenant compte d'un critère d'optimisation d'espace d'installation.

8. Système de configuration selon l'une des revendications précédentes 1 à 7,
dans lequel l'unité de sortie (5) du système de configuration (1) comporte un affichage, lequel affiche les unités fonctionnelles de remplacement (11) déterminées avec les unités fonctionnelles (10) originales non remplacées dans un état monté virtuel en projection dans l'armoire électrique (9) .

9. Système de configuration selon l'une des revendications précédentes 4 à 8,
dans lequel l'équipement utilisateur portable (2) présente comme unité de sortie (5) une paire de lunettes tridimensionnelles avec affichage.

10. Procédé de reconfiguration d'une armoire électrique (9) avec les étapes suivantes :
(a) détection (S1) d'unités fonctionnelles (10) d'un circuit électrique, lesquelles sont montées à l'intérieur d'une armoire électrique (9), à l'aide d'attributs caractéristiques des unités fonctionnelles (10), lesquelles présentent des attributs d'identification lus de façon univoque par l'unité de détection (3), et détection du circuit électrique implémenté par les unités fonctionnelles (10) ;
(b) calcul (S2) d'un schéma électrique du circuit électrique sur la base des unités fonctionnelles (10) détectees automatiquement et sur la base du circuit électrique implémenté détecte ;
(c) remplacement (S3) des unités fonctionnelles (10) détectees automatiquement du schéma électrique calculé par des unités fonctionnelles de remplacement (11) associées, lesquelles sont enregistrées dans une base de données (8), en tenant compte d'un critère d'optimisation, dans lequel le critère d'optimisation présente:
un espace d'installation requis des unités fonctionnelles de remplacement (11) à l'intérieur de l'armoire électrique (9),
une production de chaleur par les unités fonctionnelles de remplacement (11) à l'intérieur de l'armoire électrique (9),
une dissipation de chaleur par les unités fonctionnelles de remplacement (11),
un respect par les unités fonctionnelles de remplacement (11) d'exigences de certification prédéfinies et/ou
un respect par les unités fonctionnelles de remplacement (11) d'exigences de performance et/ou d'exigences de site prédéfinies ;
(d) sortie (S4) des unités fonctionnelles de remplacement (11) déterminées.
